(19) Europäisches Patentamt / European Patent Office / Office européen des brevets

(11) **EP 3 086 496 B1**

(12) **EUROPEAN PATENT SPECIFICATION**

(45) Date of publication and mention of the grant of the patent:
**03.06.2020 Bulletin 2020/23**

(51) Int Cl.:
*H04L 1/00* *(2006.01)*   *H04B 10/29* *(2013.01)*
*H04L 25/06* *(2006.01)*

(21) Application number: **15305631.2**

(22) Date of filing: **24.04.2015**

(54) **A METHOD, AN APPARATUS AND A COMPUTER PROGRAM FOR DECODING A RECEIVE SIGNAL CARRYING ENCODED DATA VALUES**

VERFAHREN, VORRICHTUNG UND COMPUTERPROGRAMM ZUR DECODIERUNG EINES EMPFANGSSIGNALS, DAS CODIERTE DATENWERTE ENTHÄLT

PROCÉDÉ, APPAREIL ET PROGRAMME INFORMATIQUE POUR LE DÉCODAGE D'UN SIGNAL DE RÉCEPTION PORTANT DES VALEURS DE DONNÉES CODÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.10.2016 Bulletin 2016/43**

(73) Proprietor: **Alcatel Lucent**
**91620 Nozay (FR)**

(72) Inventor: **SCHMALEN, Laurent**
**70435 Stuttgart (DE)**

(74) Representative: **Browne, Robin Forsythe et al**
**Hepworth Browne**
**15 St Paul's Street**
**Leeds LS1 2JG (GB)**

(56) References cited:
**EP-A1- 2 782 305**

- **TINGTING MIAO ET AL: "BER modified decode-and-forward protocol for OFDM-based linear multihop networks", CHINA COMMUNICATIONS, CHINA INSTITUTE OF COMMUNICATIONS, PISCATAWAY, NJ, USA, vol. 11, no. 11, 1 November 2014 (2014-11-01), pages 34-43, XP011569292, ISSN: 1673-5447, DOI: 10.1109/CC.2014.7004522 [retrieved on 2015-01-07]**
- **JUNHO CHO ET AL: "Analysis of soft-decision FEC on non-AWGN channels", OPTICS EXPRESS, vol. 20, no. 7, 26 March 2012 (2012-03-26) , page 7915, XP055148630, ISSN: 1094-4087, DOI: 10.1364/OE.20.007915**

**Description**

Embodiments of the present disclosure relate to a method, an apparatus and a computer program for decoding a receive signal carrying encoded data values.

Background

In some transmission networks, e.g., wireless communications networks or optical networks, one or more intermediate nodes are provided which may receive a signal from a transmitter and impaired by a communication channel and at least partly recover the received signal before retransmission. Such intermediate nodes are also known as relay stations in wireless communications, or repeaters or regenerators in wired communications, such as optical communications for example. Depending on the kind of signal, the intermediate nodes may carry out various operations for signal recovery, e.g., signal timing estimation or chromatic dispersion operation. Additionally, the intermediate nodes may carry out Forward Error Correction (FEC) operations on the signal, such as decoding and encoding. Typically, the data values of the received signal are encoded in a redundant way so as to allow the intermediate node to detect a limited number of errors that may occur anywhere in the data values, and often to correct these errors.

Various examples of intermediate nodes with FEC are known. One example of an intermediate node fully decodes the received signal and re-encodes the decoded signal before retransmission. However, such an intermediate node may consume a vast amount of power and be bulky, which leads to high operational expenditure. Therefore, in practice, after performing at least part of the operations for signal recovery the signal is quantized and FEC is not performed before retransmission of the signal. In other words, the intermediate node performs a hard decision on the signal, i.e., the output values of the signal may only take one value of a fixed set of possible values.

When a signal is received by a receiver, i.e., processed by a decoder, FEC is carried out on the received signal. FEC is typically discriminated into soft-decision FEC and hard-decision FEC. In soft-decision FEC, an error corrected (decoded) output value may take on a whole range of values in-between a fixed set of possible values. On the contrary, in hard-decision FEC, the error corrected (decoded) output values may only take one value of the fixed set of possible values. Due to the variety of possible values for the error corrected output values, soft-decision FEC (decoding) may allow for higher error-correction performance than hard-decision FEC (decoding).

In particular for soft-decision FEC, a Gaussian noise distribution of the received signal is conventionally assumed. The Additive White Gaussian Noise (AWGN) distribution model, where the noise signal has a Gaussian distribution in the time domain with an average time domain value of zero and an uniform power across the frequency spectrum, allows to efficiently determine likelihood values used for error correction. A likelihood value indicates for a respective FEC encoded data value of the received signal the probability that the FEC encoded data value is equal to one specific value of a fixed set of possible values.

Considering the noise distribution of a signal which has been retransmitted by a plurality of intermediate nodes, the noise distribution may not be Gaussian when the signal is received and decoded at a receiver. Instead, the received signal may comprise an AWGN noise component and a non-AWGN noise component, which is any noise that is not AWGN. However, if the noise of the received signal is not only AWGN, the likelihood values determined for FEC may be suboptimal, which may lead to decoding performance degradation. Hence, there may be a desire to improve decoding.

Tingting Miao et. al.: "BER Modified Decode- and-Forward Protocol for OFDM-Based Linear Multihop Networks, China Communications, China Institute of Communications, Piscataway, NJ, USA, Vol. 11, No. 11, November 1, 2014, pages 34 to 43 discloses to derive a log likelihood ratio modification function relying on the accumulated bit error rate of all links of a transmission path except the last one.

Summary

Some simplifications may be made in the following summary, which is intended to highlight and introduce some aspects of the various example embodiments, but such simplifications are not intended to limit the scope of the present invention, which is only defined by the attached claims. Detailed descriptions of preferred exemplary embodiments adequate to allow those of ordinary skill in the art to make and use the inventive concepts will follow in later sections.

According to a first aspect of the present disclosure, it is provided a method for decoding a receive signal carrying at least one encoded data value, the receive signal having a non-AWGN and an AWGN noise component. The method derives a second likelihood value based on a first likelihood value for the encoded data value and an effective error probability of a transmission path of the receive signal. The transmission path is assumed to comprise H sub-paths with H being an integer. The first likelihood value is based on the AWGN noise component and the effective error probability is based on the non-AWGN noise component. The non-AWGN noise component is related to the first H-1 sub-paths being modelled as BSC channels. The effective error probability represents the accumulated error probabilities of the first H-1 sub-paths. The method further comprises deriving a decoded data value based on the second likelihood value, and estimating the effective error probability using the first or second likelihood value, a hard decision of the decoded data value and a noise power of the AWGN noise component.

In some embodiments, estimating the effective error probability comprises determining a relation of the noise power of the AWGN noise component and a combination of the first or second likelihood value, the hard decision of the decoded data value and the noise power of the AWGN noise component. In some embodiments, the combination of the first or second likelihood value, the hard decision of the decoded data value and the noise power of the AWGN noise

$$P_{<0} - \frac{1}{2} \operatorname{erfc}\left(\sqrt{\frac{1}{2\sigma_{h,i}^2}}\right),$$

component corresponds to with $\sigma_{h,i}^2$ denoting the noise power of the AWGN noise component, $P_{<0}$ denoting a probability based on a combination of the first likelihood value and the hard decision of the decoded data value.

In some embodiments, deriving the second likelihood value comprises combining the effective error probability and the first likelihood value.

In some embodiments, deriving the second likelihood value comprises determining a relation of a first combination of the effective error probability and the first likelihood value and a second combination of the effective error probability and the first likelihood value.

In some embodiments, the receive signal is an optical signal.

According to a second aspect of the present disclosure, it is provided a computer program having a program code for performing the method of any of the above embodiments, when the computer program is executed on a computer or processor.

According to a third aspect of the present disclosure, it is provided an apparatus for decoding a receive signal carrying at least one encoded data value, the receive signal having a non-AWGN and an AWGN noise component. The apparatus comprises a processor unit configured to derive a second likelihood value based on a first likelihood value for the encoded data value and an effective error probability of a transmission path of the receive signal. The transmission path is assumed to comprise H sub-paths with H being an integer. The first likelihood value is based on the AWGN noise component and the effective error probability is based on the non-AWGN noise component. The non-AWGN noise component is related to the first H-1 sub-paths being modelled as BSC channels. The effective error probability represents the accumulated error probabilities of the first H-1 sub-paths. The apparatus further comprises a decoder configured to derive a decoded data value based on the second likelihood value. The processing unit is configured to estimate the effective error probability using the first or second likelihood value, a hard decision of the decoded data value and a noise power of the AWGN noise component.

In some embodiments, estimating the effective error probability comprises combining the first or second likelihood value and the hard decision of the decoded data value to a combined value; determining a hard decision of the combined value; increasing a first count value or a second count value based on the hard decision of the combined value; determining a count ratio of the first count value and a sum of the first and second count values; and determining a relation of the noise power of the AWGN noise component and a combination of the count ratio and the noise power of the AWGN noise component.

In some embodiments, estimating the effective error probability comprises determining a hard decision of the first or second likelihood value; combining the hard decision of the first or second likelihood value and the hard decision of the decoded data value to a combined value; increasing a first count value or a second count value based on the combined value; determining a count ratio of the first count value and a sum of the first and second count values; and determining a relation of the noise power of the AWGN noise component and a combination of the count ratio and the noise power of the AWGN noise component.

In some embodiments, estimating the effective error probability is based on an expression which is mathematically correspondent to

$$P_{eff} = \frac{P_{<0} - \frac{1}{2}\operatorname{erfc}\left(\sqrt{\frac{1}{2\sigma_{h,i}^2}}\right)}{\operatorname{erf}\left(\sqrt{\frac{1}{2\sigma_{h,i}^2}}\right)},$$

with $P_{eff}$ denoting the effective error probability, $\sigma_{h,i}^2$ denoting the noise power of the AWGN noise component, $P_{<0}$ denoting a probability based on a combination of the first or second likelihood value and the hard decision of the decoded data value.

In some embodiments, the method further comprises limiting the effective error probability to a value included in a value range which is narrower than [0, 1].

In some embodiments, the method further comprises limiting the effective error probability to a value included in [0, 0.5].

According to a fourth aspect of the present disclosure, it is provided a network comprising one or more intermediate nodes configured to generate soft- or hard information related to an encoded data value of a signal carrying at least one encoded data value; and one or more apparatuses according to the third aspect.

Some embodiments may comprise analog and/or digital circuitry installed within the apparatuses for performing the respective methods. Digital control circuitry, e.g., a DSP, an FPGA, an ASIC, or a general purpose processor, needs to be programmed accordingly. Hence, yet further embodiments also provide a computer program having a program code for performing embodiments of the encoding/decoding methods, when the computer program is executed on a computer or a programmable hardware device.

Brief description of the Figures

Some embodiments of apparatuses and/or methods will be described in the following by way of example only, and with reference to the accompanying figures, in which

Fig. 1 illustrates a first intermediate node for an optical transmission network;

Fig. 2 illustrates a second intermediate node for an optical transmission network;

Fig. 3 illustrates a third intermediate node for an optical transmission network;

Fig. 4 illustrates a relation between a required accumulated signal-to-noise ratio and a number of intermediate nodes for a certain information rate in a signal path of an optical signal;

Fig. 5 illustrates a model of a transmission path of an optical signal;

Fig. 6 illustrates an equivalent model of the transmission path illustrated in Fig. 5;

Fig. 7 illustrates a further equivalent model of the transmission path illustrated in Figs. 5 and 6;

Fig. 8 illustrates a receiver for an optical signal;

Fig. 9 illustrates an example of an apparatus;

Fig. 10 illustrates a further example of an apparatus;

Fig. 11 illustrates an example of a relation between a first likelihood value derived for an encoded data value of a receive signal based on the AWGN noise component and a second likelihood value based on the first likelihood value for the encoded data value and an effective error probability of a transmission path of the receive signal;

Fig. 12 illustrates a relation between a bit error rate of and a signal-to-noise ratio for the receiver illustrated in Fig. 8 and the example illustrated in Fig. 10;

Fig. 13 illustrates a further example of an apparatus;

Fig. 14 illustrates a variation of the example of an apparatus illustrated in Fig. 13;

Fig. 15 illustrates an alternative further example of an apparatus;

Fig. 16 illustrates a variation of the example of an apparatus illustrated in Fig. 15;

Fig. 17 illustrates another alternative further example of an apparatus;

Fig. 18 illustrates a variation of the example of an apparatus illustrated in Fig. 17;

Fig. 19 illustrates a relation between a bit error rate and a signal-to-noise ratio for the receiver illustrated in Fig. 8, the example illustrated in Fig. 10, and the examples illustrated in Figs. 13 to 18; and

Fig. 20 illustrates a flowchart of an example of a method for decoding a receive signal carrying encoded data values.

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Although the present disclosure discusses example embodiments related to optical communication networks, the skilled person will appreciate that the principles of the present disclosure may also be transferred to other types of communication systems leading to non-AWGN distributed noise components in received signals, such as wireless or wireline communication systems. Non-AWGN distributed noise may be understood as noise having a Probability Density Function (PDF) substantially different from that of the normal distribution.

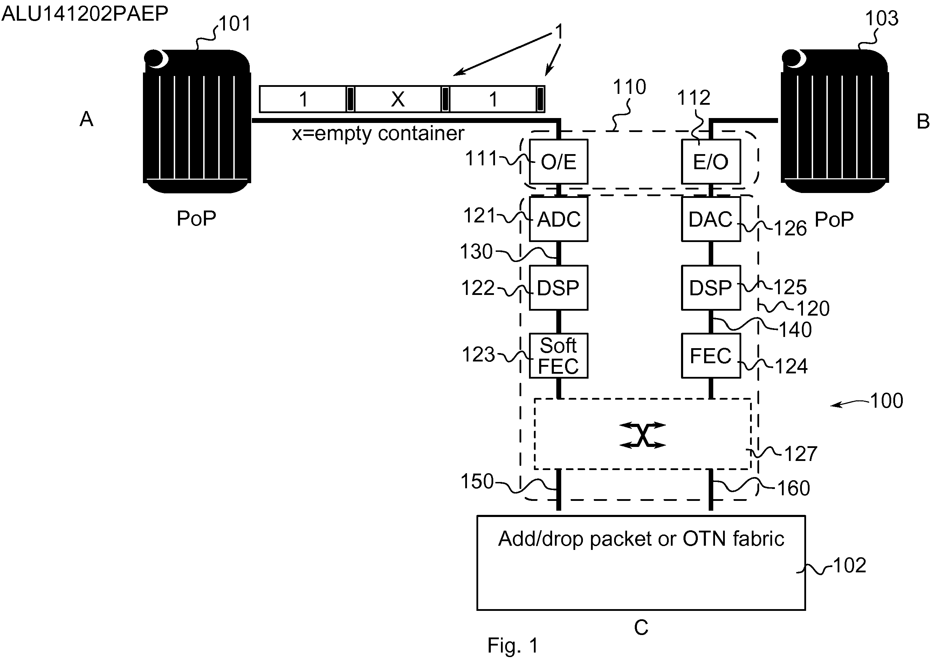

**Fig.1** illustrates an intermediate node 100, for example an optical repeater, which may be located within an optical transmission network between two Points of Presence (PoP) 101, 103. The PoPs 101, 103 may for example be routers for optical signals at locations A and B. An optical signal containing a header 1 may be transmitted from PoP 101 and may be received by intermediate node 100. Header 1 may include information related to a destination of the optical signal or at least of certain data packets of the optical signal. For example, header 1 may define that certain data packets of the optical signal are to be transmitted to router 103 at location B or to another network element at a location C different from locations A and B.

In the illustrated example, intermediate node 100 comprises an Optical - Electrical - Optical conversion unit (OEO) 110 and a processing unit 120.

The optical signal is received by the OEO 110 which comprises an Optical - Electrical converter (O/E) 111 for incoming signals and an Electrical - Optical converter (E/O) 112 for outgoing signals. O/E 111 may convert an input optical signal into an analog electrical signal and output the electrical signal to processing unit 120. E/O 112 may convert an input analog electrical signal from the processing unit 120 into an optical signal and output the optical signal to an optical transmission line, such as an optical fiber. OEO 110 may convert the received optical signal into an inbound analog electrical signal, which may be input to an Analog - to - Digital converter (ADC) 121 of processing unit 120.

The ADC 121 may convert the inbound analog electrical signal into an inbound digital electrical signal, which may be input to Digital Signal Processor (DSP) 122. DSP 122 may perform several signal processing operations on the inbound digital electrical signal. For example, DSP 122 may perform demodulation and/or operations for signal regeneration, e.g., timing estimation, dispersion compensation, equalization, skew correction, or signal amplification. The output of DSP 122 may be input to soft-decision FEC decoder unit 123. Soft-decision FEC decoder unit 123 may perform soft-decision decoding on the inbound digital electrical signal in order to detect and correct for errors in the data packets or values of the inbound digital electrical signal. The output of soft-decision FEC unit 123 may be input to switching element 127.

The switching element 127 may redirect the data packets of the inbound digital electrical signal based on the information given in header 1. For example, if the information in header 1 defines that certain data values are to be transmitted to PoP 103 at location B, the switching element 127 may direct the inbound digital electrical signal from input processing line 130 to output processing line 140. If the information in header 1 denotes that certain data packets are to be transmitted to another network element at a location C, the switching element 127 may direct the inbound digital electrical signal from the input processing line 130 to a further output line 150 coupled to a processing unit 102. Processing unit 102 may be configured to add or remove data values to / from a received digital electrical signal and to further process this signal, e.g., process the digital electrical signal for transmitting it to a network element at a location C or to an Optical Transport Network (OTN).

In the outbound direction, e.g. if the digital electrical signal is directed from the input processing line 130 to the output processing line 140 by the switching element 127, the outbound digital electrical signal may be input to a FEC encoder unit 124. FEC encoder unit 124 may perform FEC encoding on the digital electrical signal in order to add redundant parity information to the signal that can be used to detect and correct errors in subsequent apparatuses. The output of the FEC encoder unit 123 may be input to DSP 125 which may perform further signal operations on the outbound encoded digital electrical signal. An example for such an operation may be modulation, such as digital Phase Shift Keying (PSK) or Quadrature Amplitude Modulation (QAM), or precompensation of certain distortions. The output of DSP 125 may be input to Digital-to-Analog converter (DAC) 126. DAC 126 may convert the outbound digital electrical signal into an outbound analog electrical signal. The output of the DAC 126 may be input to the OEO 110, where the E/O 112 may convert the outbound analog electrical signal into an outbound optical signal. The outbound optical signal may then be (re-)transmitted by the OEO 112, e.g., to PoP 103.

In an optical transmission network, inter alia in a simple optical transmission line, several intermediate nodes 100 may be provided for regeneration and retransmission of optical signals.

In the intermediate node 100 illustrated in Fig. 1 all data packets undergo FEC - irrespective of their destination defined in the header 1. That is, all data packets are decoded. Accordingly, complex FEC processes are carried out on a large amount of data, so that power consumption of the exemplary intermediate node 100 is high. Therefore, usually large and bulky intermediate nodes 100 need to be provided. As a consequence, the OPerational EXpenditure (OPEX) of the exemplary intermediate node 100 is relatively high.

In other words, Fig. 1 shows an optical network with intermediate active network elements. Network element 100 is relatively powerful since the signal to be repeated is completely recovered including full FEC decoding/encoding before retransmission. Such a scheme may be denoted as "decode-and-forward". Often, the execution of the FEC consumes too much power in the receiver ASIC, leading to large and bulky repeaters that may lead to large OPEX costs due to the increased power consumption.

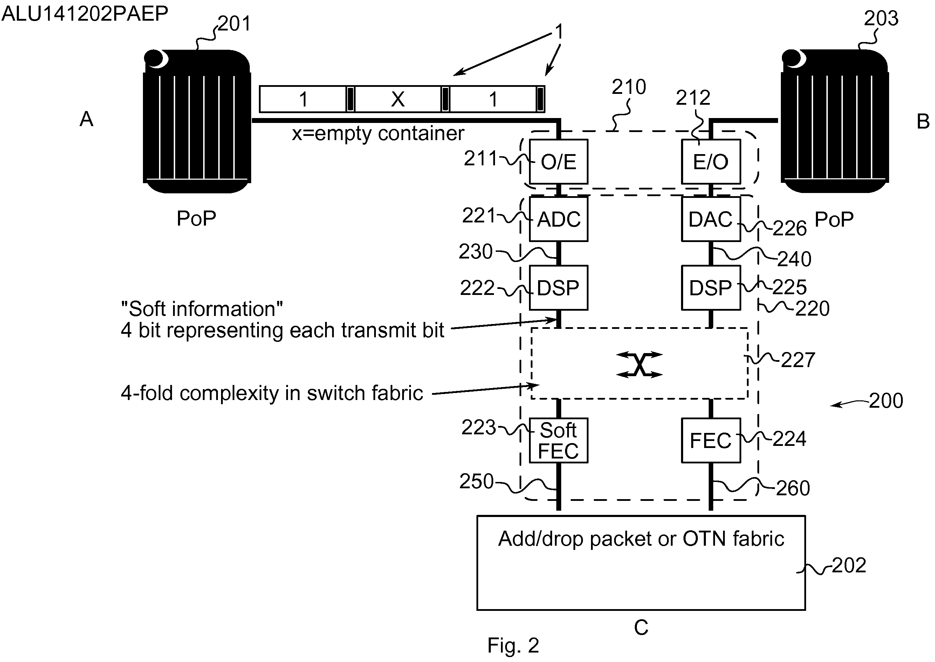

**Fig. 2** illustrates another example of an intermediate node 200, which is similar to intermediate node 100 illustrated in Fig. 1.

Like intermediate node 100, intermediate node 200 may be provided in an optical transmission network between PoPs 201, 203. Intermediate node 200 may comprise an OEO 210 and a processing unit 220. An optical signal with a header 1 transmitted form PoP 201 may be converted to an analog electrical signal by O/E 211 and digitized by ADC 221. A DSP 222 may perform adequate signal processing on the inbound digital electrical signal. However, in contrast to intermediate node 100, here the switching element 127 may be provided upstream of soft - decision FEC decoding unit 223 along input processing line 230. In other words, the switching element 127 is located before the decoding unit 223 in the signal processing chain. If the header 1 defines that certain data packets of the digital electrical signal are to be transmitted to PoP 203, for example, switching element 227 may direct the inbound signal to output processing line 240 prior to FEC decoding to obtain an outbound digital signal. There the outbound digital signal may further be processed by DSP 225, DAC 226, similar to intermediate node 100. The resulting outbound analog electrical signal may then be converted to an optical signal by E/O 212 and (re-)transmitted or forwarded to PoP 203.

If the header 1 defines that certain data packets of the received signal are to be transmitted to a network element different from PoP 203, the corresponding digital signal is directed to further output line 250. Via the further output line 250, the digital signal may be fed to soft-decision FEC decoder unit 223. That is, only data values to be transmitted to a specific network element may undergo soft-decision FEC. Accordingly, only data values to be transmitted from a specific network element may undergo FEC encoding in FEC unit 224. Like processing unit 102 of intermediate node 100, processing unit 202 may be configured to add or remove data values to / from a received digital signal and to further process this signal, e.g., process the digital electrical signal for transmitting it to a network element at a location C or to an OTN.

In the intermediate node 200, information of the header 1 may be used to separate the data packets of the input optical signal for which FEC decoding is to be carried out from the data packets of the input optical signal which are to be solely retransmitted. Still however, the output of DSP 222 represents soft-information, e.g., each bit to be transmitted is represented by a soft-value of a plurality of bits. For example, each bit of the optical signal converted to the digital electrical signal may be represented by four to six bits at the output of DSP 222. Accordingly, the amount of data to be directed by switching element 227 from input processing line 230 to output processing line 240 is heavily increased.

In comparison to the example of Fig. 1, FEC decoding is not carried out before switching in intermediate node 200, but rather the soft output of the DSP is relayed to the fiber. Such a scheme may be denoted as "DSP-and-forward". However, this solution has the disadvantage that soft-values, usually represented with four to six bits, have to be forwarded, requiring a huge switching engine.

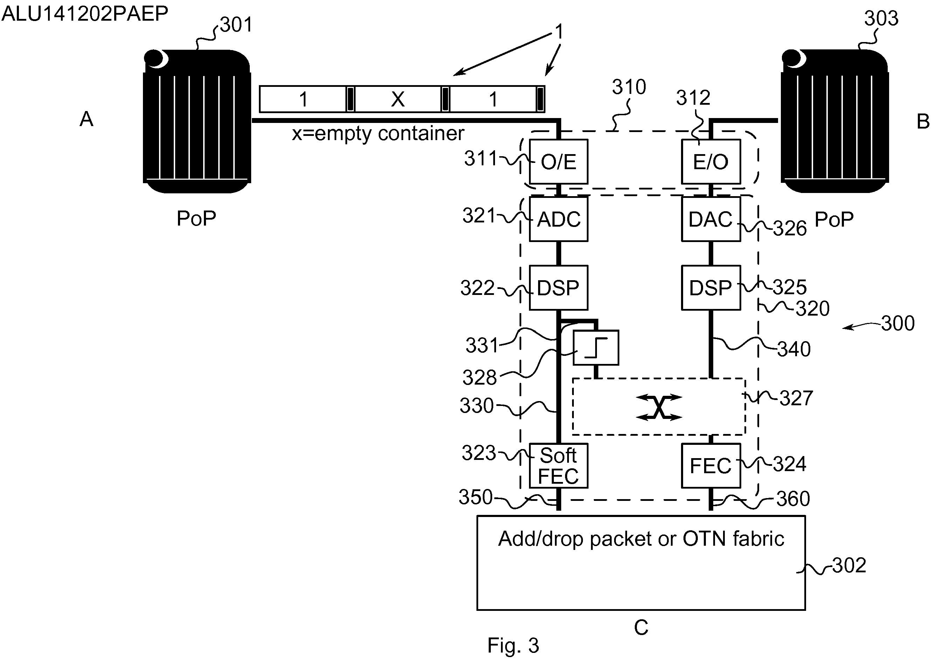

**Fig. 3** illustrates a further example of an intermediate node 300.

Like intermediate node 200, intermediate node 300 may be provided in an optical transmission network between PoPs 301, 303. Intermediate node 300 may comprise an OEO 310 and a processing unit 320. An optical signal with a header 1 transmitted from PoP 301 may be converted to an analog electrical signal by O/E 311 and digitized by ADC 321. If the header 1 defines that certain data packets or values of the digital signal are to be transmitted to PoP 303, switching element 327 may direct the signal to output processing line 340, where the now outbound digital signal may further be processed by DSP 325, DAC 326, similar to intermediate node 200. The outbound analog electrical signal may then be converted to an optical signal by E/O 312 and transmitted to PoP 303.

However, in contrast to intermediate node 200, a hard-decision unit 328 may be provided upstream of switching element 327 along input switching line 331 connecting input processing line 330 and switching element 327. The hard-decision unit 328 may carry out a hard-decision on the soft-information data values output from DSP 322, if the header 1 defines that the soft-information data values are to be forwarded or transmitted to PoP 303. That is, the output values of the hard-decision unit 328 may only take one value of a fixed set of possible values, for example "0" or "1" in the binary case. Accordingly, the amount of data to be directed by switching element 327 from input switching line 331 to output processing line 340 can be significantly reduced compared to intermediate node 200 of Fig. 2.

If the header 1 denotes that certain data values of the inbound digital signal are to be transmitted to a network element different from PoP 303, the inbound digital signal is directed to further output line 350. The further processing is similar to that of the corresponding part of intermediate element 200. Therefore, a further detailed description will be omitted.

In other words, a simplified method is shown in Fig. 3, where a hard-decision is performed before entering the switching fabric. Such a scheme may be denoted as "quantize-and-forward".

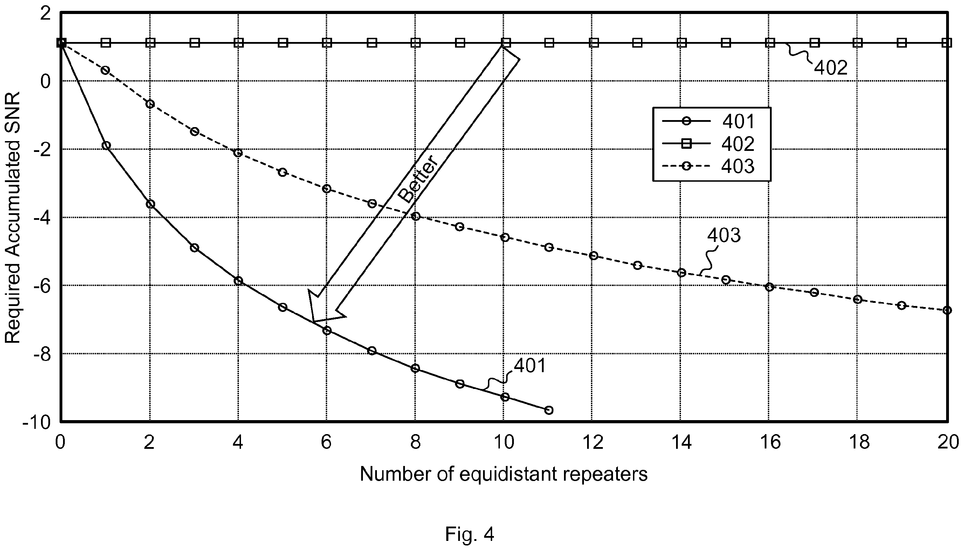

**Fig. 4** illustrates an exemplary relation between an accumulated required Signal-to-Noise Ratio (SNR) of an optical signal and a number of intermediate nodes in a signal path of the optical signal. The abscissa represents the number of intermediate nodes in the signal path of the optical signal. In the example shown in Fig. 4, the intermediate nodes (repeaters) are spaced at equal distances from each other. The ordinate represents the accumulated SNR along the transmission path of the optical signal which is required to achieve a certain information rate (capacity) in a transmission channel. For example, the information rate may be 0.8 bit/channel use in a transmission channel with Binary Phase-Shift Keying (BPSK) modulation. A low required SNR indicates high signal transmission performance.

Line 401 represents data obtained when employing intermediate nodes 100 as illustrated in Fig. 1, line 402 represents data obtained when employing intermediate nodes 200 as illustrated in Fig. 2, and line 403 represents data obtained when employing intermediate nodes 300 as illustrated in Fig. 3. As can be seen Fig. 4, a transmission path having "decode-and-forward" intermediate nodes 100 results in the lowest SNR. However, the intermediate nodes 100 have the above mentioned issues. When comparing lines 402 and 403, one may recognize that a transmission path with intermediate nodes 300 demands a lower SNR compared to transmission path with intermediate nodes 200. Accordingly, intermediate nodes 300 seem to be well-suited for usage in optical transmission networks.

In other words, if one carries out an information theoretical analysis of the above schemes, one sees that the simpler quantize-and-forward scheme of Fig. 3 outperforms the DSP-and-forward scheme of Fig. 2. This is why it is an ideal candidate as regenerative network element for wireline communication systems, particularly optical communication systems.

When considering an optical network with coherent technology, there may be regenerators that partly recover the signal (OEO conversion), but that do not perform full FEC for complexity reasons. These intermediate nodes may simply perform a hard-decision before forwarding the data. This hard-decision though having advantages in terms of information theory, introduces additional errors and leads to a non-Gaussian channel model at the receiver that needs to carry out the final soft-decision FEC. This non-Gaussian distribution of the samples at the input to the receiver's error correction engine may cause performance losses. Unfortunately, when considering a transmission link with several quantize-and-forward network elements and a soft-decision FEC at the receiver, the noise distribution at the input of the soft-FEC is not Gaussian anymore. In most of the soft-FEC engines, a Gaussian noise distribution is assumed leading to a very simple and efficient computation of the Log-Likelihood Ratios (LLRs). Assuming a transmission with $y = x + n$, where $x$ is a binary phase-shift keying modulated transmitted data and $n$ is complex Gaussian noise with variance $N_0 = 2\sigma_n^2$, where $\sigma_n^2$ is the variance of the real-valued noise component. In this case, the log-likelihood ratios can easily be computed as

$$L(y \mid x) = \log\left(\frac{p(y \mid x = +1)}{p(y \mid x = -1)}\right) = \frac{2}{\sigma_n^2} y = \frac{4}{N_0} y \qquad (1)$$

If the noise model differs however from Gaussian log-likelihood-ratios, this computation is not valid anymore and the model may lead to a performance degradation.

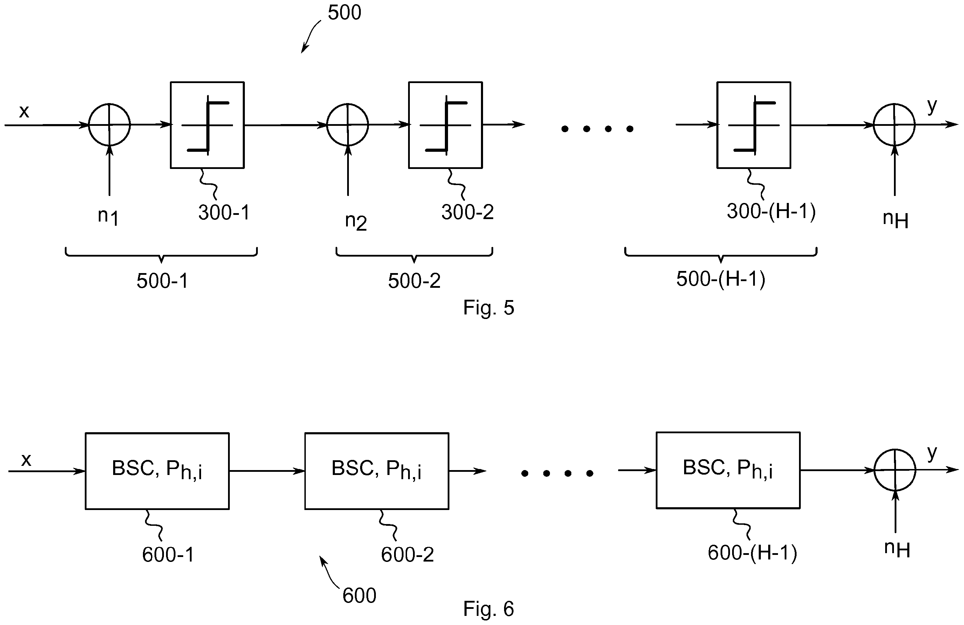

**Fig. 5** illustrates an example channel model of a transmission path 500 of an optical signal. Exemplarily, transmission path 500 may be a transmission path for BPSK transmission. However, the transmission path 500 may alternatively be a transmission path for Quadrature Phase-Shift Keying (QPSK) and Gray mapping. In this configuration, the complex QPSK transmission is to be decomposed into two equivalent BPSK transmissions. Alternatively, the transmission path may be configured for usage of any other suitable transmission methods.

An input x is to be transmitted via transmission path 500. Input x may be a binary input, i.e. x ∈ {+1, -1}. The transmission path 500 may be divided into $H$ equidistant sub-paths 500-1, 500-2, ..., 500-H. Such a configuration of transmission path 500 may be exemplary for submarine optical transmission paths. Each of the sub-paths 500-1, 500-2, ..., 500-(H-1) may comprise an intermediate node 300-1, 300-2, ..., 300-(H-1), e.g., an intermediate node similar to intermediate node 300 illustrated in Fig. 3. The intermediate node of each sub-path 500-1, 500-2, ..., 500-(H-1) is illustrated as a hard-decision unit. At the end of transmission path 500 an output y is provided to a receiving element (not shown), which is connected to the transmission path 500. For simplicity, one may assume that only an AWGN noise component is present and that a DSP in the intermediate node 300-1, 300-2, ..., 300-(H-1) of each sub-path is able to perfectly remove all other impairments of the transmission path 500. Therefore, output $y$ may be represented as $y = x'$ $+ n$, with $n$ being the AWGN noise component along the transmission path 500 when not taking into account the other impairments introduced by the H-1 intermediate nodes of the transmission path 500 and $x'$ being an intermediate signal component which has undergone all impairments by the first H-1 intermediate nodes of the transmission path 500.

Not taking into account the other impairments of the transmission path 500, one may assume that the overall SNR of the transmission path 500 amounts to

$$\frac{E_s}{N_0} = \frac{1}{2\sigma_n^2} \qquad (2),$$

With $E_s$ being the power of the transmitted signal, $N_0 = 2\sigma_n^2$ being the noise power and $\sigma_n$ being the variance of the total real-valued noise component of the AWGN noise component of the transmitted signal.

For the transmission path 500 being divided into the sub-paths 500-1, 500-2, ..., 500-H, the AWGN noise component may be determined for each sub-path according to

$$\sigma_{h,i}^2 = \frac{\sigma_n^2}{H} \qquad (3),$$

assuming that each sub-path 500-1, 500-2, ..., 500-H has the same noise contribution. For example, this assumption is valid for undersea networks or terrestrial links, which have an equidistant repeater spacing.

Accordingly, the accumulated AWGN noise component $n$ of the transmission path 500 may be represented as sum of the AWGN noise components $n_1$, $n_2$,..., $n_H$ for the sub-paths 500-1, 500-2, ..., 500-H.

In other words, the equivalent channel model in this example is assumed to be a binary-input AWGN channel, which models quite well the coherent-fiber optic transmission system with BPSK transmission but also with QPSK and Gray mapping (by decomposing the complex QPSK transmission into two equivalent BPSK transmissions). One has a channel (shown in Fig. 5) with binary input, i.e., x ∈ {+1, -1}. One assumes that the total SNR of the complete transmission link amounts to equation (2) and that our transmission link is subdivided into $H$ hops that are equidistantly spaced. This equidistant spacing is often present in submarine optical transmission links. In that case, one assumes that each hop is affected by Gaussian noise as in equation (3), and $\sigma_n^2$ denotes the total cumulated noise variance. The hard decision after each additive noise transforms each hop into an equivalent discrete memoryless channel. For simplicity, one starts with assuming that only AWGN noise is present and that a genie-aided digital signal processor is able to perfectly remove all other channel impairments.

**Fig. 6** illustrates an equivalent model of the transmission path 500 illustrated in Fig. 5. For the assumed example of BPSK transmission with a binary input x $\in$ {+1, -1}, the hard-decision of each hard-decision unit 328 in Fig. 5 may be represented as a channel segment of a Binary Symmetric Channel (BSC) 600-1, 600-2, ..., 600-(H-1). The BSC is a binary channel, i.e., it can transmit only one of two possible binary values. The transmission is not perfect, and occasionally the input binary value may be "flipped" during transmission, so that the other of the two possible binary values is output at the end of the BSC. The probability of erroneous transmission is the same for both possible binary values in a BSC.

Each BSC channel segment 600-1, 600-2, ..., 600-($H$-1) may have an error probability equal to

$$P_{h,i} = \frac{1}{2}\text{erfc}\left(\sqrt{\frac{1}{2\sigma_{h,i}^2}}\right) = \frac{1}{2}\text{erfc}\left(\sqrt{\frac{H}{2\sigma_n^2}}\right) \qquad (4),$$

with erfc($x$)being the complementary error function, which is defined as

$$\text{erfc}(x) = 1 - \text{erf}(x) = 1 - \left(\frac{2}{\sqrt{\pi}}\int_0^x \exp(-t^2)dt\right) \qquad (5).$$

Accordingly, the transmission path 500 illustrated in Fig. 5 may be modeled as a chain of H-1 BSCs each having an error probability $P_{h,i}$ and an AWGN noise component $n_H$ of the last sub-path.

In other words, if we assume BPSK transmission with channel symbols x $\in$ {-1, +1}, each intermediate quantizer (hard decision) transforms that part of the channel segment to an equivalent BSC with the error probability given in equation (4). One can thus model the channel as well as the concatenation of H-1 BSCs each with error probability $P_{h,i}$.

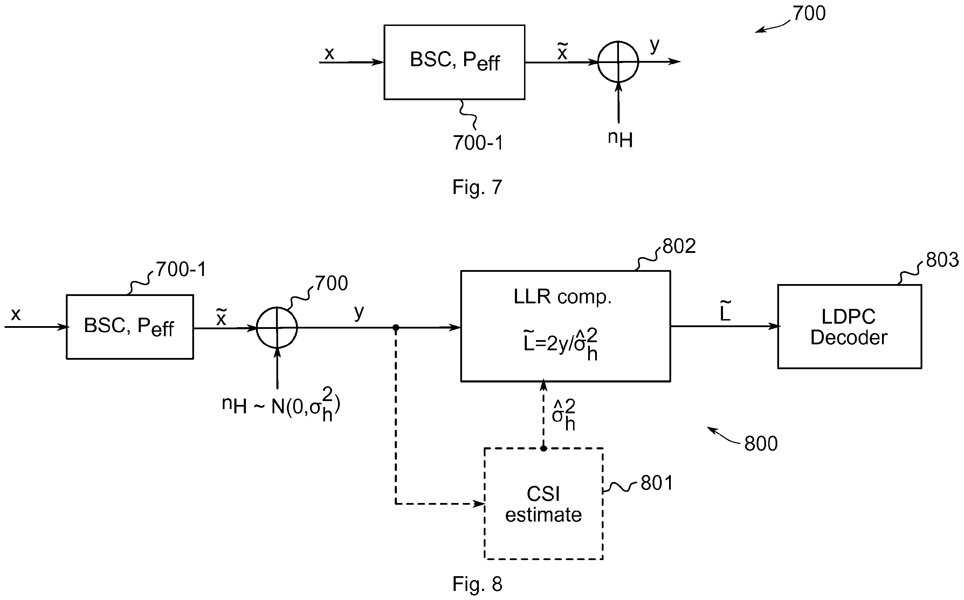

**Fig. 7** illustrates a further equivalent model of the transmission paths 500, 600 illustrated in Figs. 5 and 6. The $H$-1 BSC segments 600-1, 600-2, ..., 600-(H-1) of transmission path 600 illustrated in Fig. 6 may equivalently be modeled as a single BSC. Accordingly, transmission path 700 of Fig. 7 can be represented as a single effective BSC 700-1 with an effective error probability $P_{eff}$ and the AWGN noise component $n_H$ of the last sub-path. In one example, the effective error probability $P_{eff}$ of effective BSC 700-1 may be equal to

$$P_{eff} = \frac{1}{2}\left(1 - \left(1 - 2P_{h,i}\right)^{H-1}\right) = \frac{1}{2}\left(1 - \left(1 - \text{erfc}\left(\sqrt{\frac{1}{2\sigma_{h,i}^2}}\right)\right)^{H-1}\right) =$$

$$= \frac{1}{2}\left(1 - \left(1 - \text{erfc}\left(\sqrt{\frac{H}{2\sigma_n^2}}\right)\right)^{H-1}\right) = \frac{1}{2}\left(1 - \text{erf}\left(\sqrt{\frac{H}{2\sigma_n^2}}\right)^{H-1}\right) \qquad (6).$$

The channel transition probability of transmission path 700 illustrated in Fig. 7 can be obtained by a Gaussian mixture model as

$$p(y \mid x) = \sum_{\tilde{x}\in\{\pm1\}} p(y,\tilde{x} \mid x) = \sum_{\tilde{x}\in\{\pm1\}} p(y \mid \tilde{x})P(\tilde{x} \mid x) \qquad (7),$$

with

$$p(y \mid x = +1) = \sum_{\tilde{x} \in \{\pm 1\}} p(y \mid \tilde{x}) P(\tilde{x} \mid x = +1) = (1 - P_{eff}) p(y \mid \tilde{x} = +1) + P_{eff} p(y \mid \tilde{x} = -1) \quad (8)$$

and

$$p(y \mid x = -1) = \sum_{\tilde{x} \in \{\pm 1\}} p(y \mid \tilde{x}) P(\tilde{x} \mid x = -1) = (1 - P_{eff}) p(y \mid \tilde{x} = -1) + P_{eff} p(y \mid \tilde{x} = +1) \quad (9).$$

$\tilde{x}$ represents the input binary value $x$ after passage of the BSC 700-1 having the effective probability $P_{eff}$.

Regarding the output $y$ of the transmission path 700, the probability distribution $p(y)$ under the assumption of independent and identically distributed random input values $x$ may be determined as

$$p(y) = \frac{1}{2} p(y \mid x = +1) + \frac{1}{2} p(y \mid x = -1) = \frac{1}{2} p(y \mid \tilde{x} = +1) + \frac{1}{2} p(y \mid \tilde{x} = -1) \quad (10).$$

As can be seen from equation (10), $p(y)$ may be independent of $P_{eff}$, that is $p(y)$ may be indistinguishable for a case where $P_{eff} = 0$ from a case where $P_{eff} \neq 0$. The distribution $p(y)$ may be bi-Gaussian, which may be observed for transmitting BPSK modulated data values over a transmission path with only AWGN. However, the influence of the additional errors of the BSC may be detrimental during FEC in a receiving element which receives output $y$ of the transmission path. If only $p(y)$ is considered for FEC, one may not distinguish between a case where only AWGN is present and a case where additionally distortions of the binary input $x$ by the BSC is present.

**Fig. 8** illustrates a receiver 800 which receives an optical signal y from a transmission path 700 as described in detail with reference to Fig. 7 and derives decoded data values from the received signal $y$. Decoder 800 comprises a Channel State Information (CSI) estimation unit 801, an LLR computation unit 802 and a decoder 803 which implements a Low Density Parity Check (LDPC) decoding rule, for example. CSI unit 801, likelihood computation unit 802 and decoder 803 are shown as single elements in Fig. 7, however the functionality of these elements may alternatively be realized by one or more processing units or other suitable elements.

CSI unit 801 may determine channel state information related to the transmission path 700 based on the received signal $y$. For example, CSI unit 801 may estimate the AWGN noise component power $\sigma_{h,i}^{2}$ of the received signal $y$ and input the estimated $\sigma_{h,i}^{2}$ to likelihood computation unit 802.

Likelihood computation unit 802 may compute LLRs as soft-information according to

$$\tilde{L} = L(y \mid \tilde{x}) = \log\left(\frac{P(y \mid \tilde{x} = +1)}{P(y \mid \tilde{x} = -1)}\right) = \frac{2y}{\sigma_{h,i}^{2}} \quad (11).$$

Decoder 803 may take a computed likelihood value $\tilde{L}$ from likelihood computation unit 802 as an input to derive decoded data values. For example, the decoder 803 may use the LDPC decoding rule for decoding the data values. However, the skilled person will appreciate that other types of block or convolutional decoders may be used as well.

The likelihood values $\tilde{L}$ derived by likelihood computation unit 802 do not take into account that additional distortions by the effective BSC 700-1 of the transmission path 700 may be present in addition to the AWGN noise component of the last sub-path of the transmission path 700. Accordingly, a non-AWGN noise component of the received signal y is not taken into account for the likelihood values $\tilde{L}$. Note that such a non-AWGN noise component is due to the hard decisions of one or more intermediate nodes 300 (e.g. repeaters). Considering the additional distortions by the effective BSC, a proper likelihood value may be derived as

$$L(y\,|\,x) = \log\!\left(\frac{P(y\,|\,x=+1)}{P(y\,|\,x=-1)}\right) = \log\!\left(\frac{P_{\mathit{eff}}\,p(y\,|\,\tilde{x}=-1)+(1-P_{\mathit{eff}})\,p(y\,|\,\tilde{x}=+1)}{(1-P_{\mathit{eff}})\,p(y\,|\,\tilde{x}=-1)+P_{\mathit{eff}}\,p(y\,|\,\tilde{x}=+1)}\right)$$

$$= \log\!\left(\frac{(1-P_{\mathit{eff}})\dfrac{p(y\,|\,\tilde{x}=+1)}{p(y\,|\,\tilde{x}=-1)}+P_{\mathit{eff}}}{P_{\mathit{eff}}\dfrac{p(y\,|\,\tilde{x}=+1)}{p(y\,|\,\tilde{x}=-1)}+1-P_{\mathit{eff}}}\right) = \log\!\left(\frac{(1-P_{\mathit{eff}})\exp\!\left(\dfrac{2}{\sigma_{h,i}^{2}}y\right)+P_{\mathit{eff}}}{P_{\mathit{eff}}\exp\!\left(\dfrac{2}{\sigma_{h,i}^{2}}y\right)+1-P_{\mathit{eff}}}\right) \qquad (12)$$

$$= \log\frac{\left(1-\dfrac{1}{2}\left(1-\mathrm{erf}\!\left(\sqrt{\dfrac{H}{2\sigma_{n}^{2}}}\right)\right)^{H-1}\right)\exp\!\left(\dfrac{2H}{\sigma_{n}^{2}}y\right)+\dfrac{1}{2}\left(1-\mathrm{erf}\!\left(\sqrt{\dfrac{H}{2\sigma_{n}^{2}}}\right)\right)^{H-1}}{\dfrac{1}{2}\left(1-\mathrm{erf}\!\left(\sqrt{\dfrac{H}{2\sigma_{n}^{2}}}\right)\right)^{H-1}\exp\!\left(\dfrac{2H}{\sigma_{n}^{2}}y\right)+1-\dfrac{1}{2}\left(1-\mathrm{erf}\!\left(\sqrt{\dfrac{H}{2\sigma_{n}^{2}}}\right)\right)^{H-1}}$$

$$= \log\frac{\left(1+\mathrm{erf}\!\left(\sqrt{\dfrac{H}{2\sigma_{n}^{2}}}\right)^{H-1}\right)\exp\!\left(\dfrac{2H}{\sigma_{n}^{2}}y\right)+\left(1-\mathrm{erf}\!\left(\sqrt{\dfrac{H}{2\sigma_{n}^{2}}}\right)^{H-1}\right)}{\left(1-\mathrm{erf}\!\left(\sqrt{\dfrac{H}{2\sigma_{n}^{2}}}\right)^{H-1}\right)\exp\!\left(\dfrac{2H}{\sigma_{n}^{2}}y\right)+\left(1+\mathrm{erf}\!\left(\sqrt{\dfrac{H}{2\sigma_{n}^{2}}}\right)^{H-1}\right)} \qquad (13)$$

Equation (12) represents the general case, whereas equation (13) represents the case with *H-1* intermediate nodes in the transmission path as illustrated in Figs. 6 to 8.

In other words, one could also model the channel as a single BSC followed by AWGN of the last hop. This equivalent BSC has an effective error probability equal to equation (6). The channel transition probability of the channel in Fig. 7 can be obtained as equation (7) with equations (8) and (9). If one takes a pure look at the received samples *y* and computes their distribution $p(y)$, one gets, assuming i.i.d. values *x,* a distribution according to equation (10) which is a result that becomes independent from $P_{\mathit{eff}}$, and as such indistinguishable from the case where $P_{\mathit{eff}} = 0$. The distribution as such is the bi-Gaussian distribution that is observed after transmission of BPSK symbols over the AWGN channel. However, the influence of the additional errors can be detrimental in the FEC engine. This has the advantage that by purely looking at $p(y)$, it is indistinguishable of only AWGN noise is present or if additionally, the binary input is distorted by BSCs. This allows to use standard out-of-the-box estimators of channel state information (CSI) to get, for example, an estimate of the noise variance $\sigma_{h,i}^{2}$. This estimator may give an estimate of the noise-variance of the AWGN part of the channel, namely $\hat{\sigma}_{h,i}^{2}$ or simply $\hat{\sigma}_{h}^{2}$. A conventional receiver may compute the log-likelihood ratios (LLRs) according to the well known equation (11) for AWGN channels as shown in Fig. 8. However, the computation of the log-likelihood ratios does not take into account the presence of the additional BSC before the AWGN part of the channel. In fact, the computation of the LLRs according to the channel model of Fig. 7 should be equal to equations (12) and (13), with equation (12) being the general case and equation (13) taking into account the equidistant spacing of H-1 intermediate regenerations.

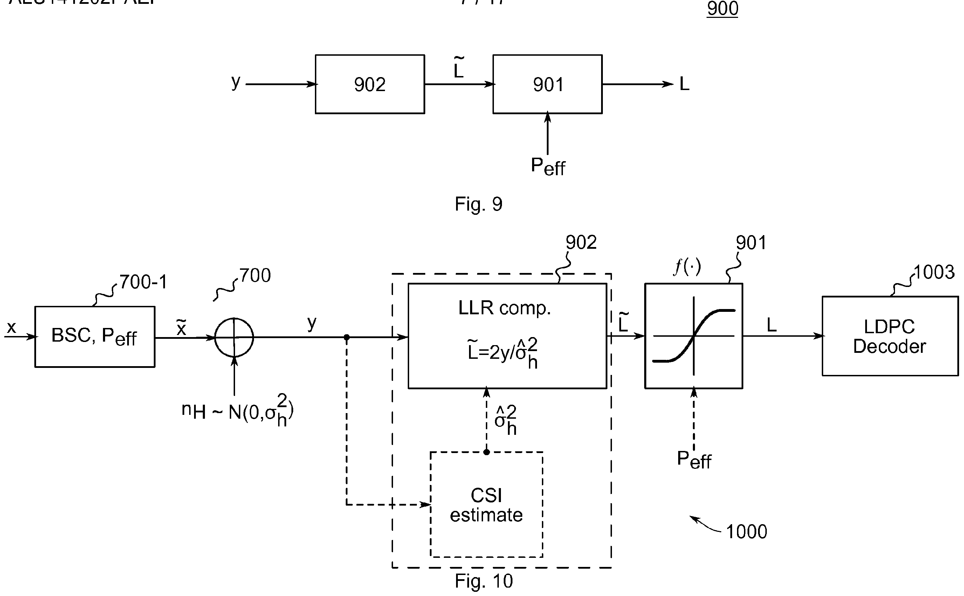

An example of an apparatus 900 which may derive likelihood values *L* taking into account distortions by the BSC is illustrated in **Fig. 9.**

The apparatus 900 comprises a first likelihood computation unit 902 and a second likelihood computation unit 901. The first likelihood computation unit 902 may determine a first likelihood value $\tilde{L}$ for an encoded data value of received signal *y* based on the AWGN noise component of the input signal *y,* e.g., using equation (11). The second likelihood computation unit 901 may derive a second likelihood value *L* based on the first likelihood value $\tilde{L}$ for the encoded data value and the effective error probability $P_{\mathit{eff}}$ of the receive signal's transmission path, e.g., using equation (14).

For deriving the second likelihood value $L$, the second likelihood computation unit 901 may for example linearly or non-linearly combine the effective error probability $P_{eff}$ and the first likelihood value $\tilde{L}$. In some embodiments, the second likelihood computation unit 901 may derive the second likelihood value $L$ by determining a relation of a first combination of the effective error probability $P_{eff}$ and the first likelihood value $\tilde{L}$ and a second combination of the effective error probability $P_{eff}$ and the first likelihood value $\tilde{L}$.

The first and second likelihood computation units 901, 902 are shown as individual circuit elements in Fig. 9, however they may also be provided as a single circuit element having the functionality of both computation units. Exemplarily, first and second likelihood computation units 901, 902 may be provided as one or more processing units or other suitable circuit elements.

For determining the second likelihood value $L$ equation (12) and equation (11) may be combined to

$$L=L(y\,|\,x) = \log\left(\frac{(1-P_{eff})\exp\left(\frac{2}{\sigma_{h,i}^2}y\right)+P_{eff}}{P_{eff}\exp\left(\frac{2}{\sigma_{h,i}^2}y\right)+1-P_{eff}}\right) \qquad (14).$$

$$= \log\left(\frac{(1-P_{eff})\exp\left(\tilde{L}\right)+P_{eff}}{P_{eff}\exp\left(\tilde{L}\right)+1-P_{eff}}\right) =: f\left(\tilde{L}\right)$$

In particular, second likelihood computation unit 901 may be configured to determine the second likelihood value $L$ according to equation (14).

**Fig. 10** illustrates an example of an apparatus 1000 which uses an embodiment of apparatus 900 illustrated in Fig. 9. Apparatus 1000 may for example be a receiver, in particular a receiver of an optical communication system. The apparatus 1000 is similar to receiver 800 illustrated in Fig. 8. The apparatus 1000 receives an input signal $y$ from a transmission path, which may for example be transmission path 700 discussed in connection with Fig. 7. The apparatus 1000 comprises a first likelihood computation unit 902, which may further comprise a CSI estimation functionality corresponding or similar to CSI unit 801 of the receiver 800 illustrated in Fig. 8. The first likelihood computation unit 902 may determine a first or intermediate likelihood value $\tilde{L}$ for a received signal sample $y$ based on the AWGN noise component of the input signal $y$, e.g. using equation (11). First likelihood value $\tilde{L}$ may be input to the second likelihood computation unit 901, which may derive a second or updated likelihood value $L$ based on the first likelihood value $\tilde{L}$ and the transmission channel's effective error probability $P_{eff}$, e.g., using equation (14). The second likelihood value $\tilde{L}$ from second likelihood computation unit 901 may be input to a decoder 1003 in order to derive decoded data values. For example, the decoder 1003 may use an LDPC rule for decoding the data values. However, the skilled person will appreciate that decoder 1003 is not limited to such a configuration. Using the effective error probability $P_{eff}$ of the transmission path of the input signal $y$, the second likelihood value $L$ takes into account signal distortions by the transmission path modeled as BSC, so that accordingly corrected second likelihood values may be fed to the decoder 1003.

In other words, some embodiments propose an out-of-the-box computation rule for AWGN LLRs and then, by post-processing, propose converting the LLRs into values that are adequate for the proposed model with intermediate regeneration.

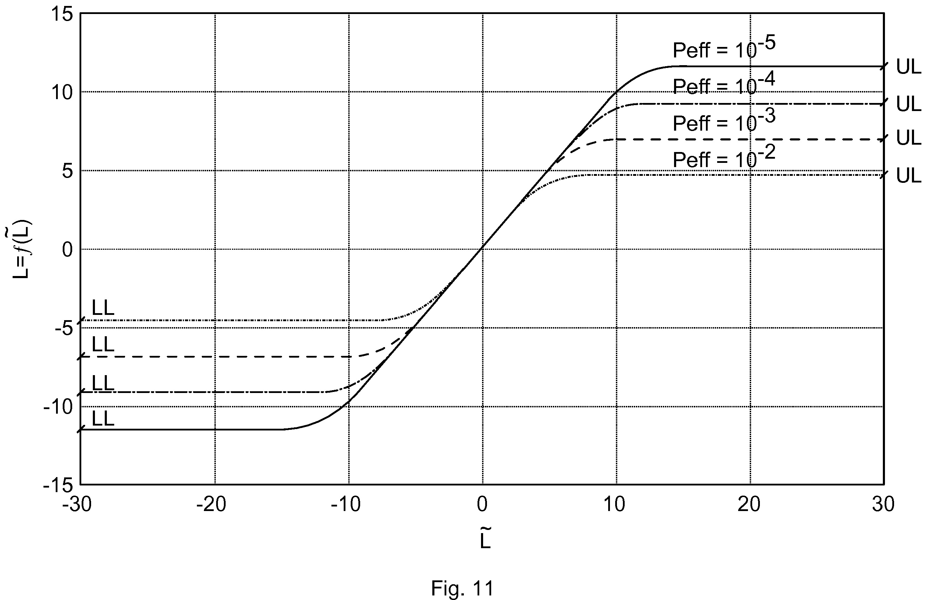

**Fig. 11** illustrates an example of a relation between the first likelihood value $\tilde{L}$ and the second likelihood value $L$ for different effective error probabilities $P_{eff}$. The abscissa represents the first likelihood value $\tilde{L}$. The ordinate represents the second likelihood value $L$.

As can be seen from Fig. 11, the second likelihood value $L$ is limited to a range of values with an upper limit UL and a lower limit LL depending on the effective error probability $P_{eff}$. The first likelihood value $\tilde{L}$ is transformed to the limited second likelihood value $L$.

Equation (14) as illustrated in Fig. 11 may be approximated. For example, the equation (14) may be approximated by a piecewise linear function as

$$\lim_{\tilde{L}\to\pm\infty} = f\left(\tilde{L}\right) = \pm\log\left(\frac{1-P_{eff}}{P_{eff}}\right) \qquad (15)$$

and as

$$f'(\widetilde{L}) := \frac{\partial}{\partial \widetilde{L}} f(\widetilde{L}) = -\frac{\left(\frac{\exp(\widetilde{L})(P_{eff}-1)}{P_{eff}\exp(\widetilde{L})-P_{eff}+1} + \frac{P_{eff}\exp(\widetilde{L})\left(P_{eff}-\exp(\widetilde{L})(P_{eff}-1)\right)}{\left(P_{eff}\exp(\widetilde{L})-P_{eff}+1\right)^2}\right)\left(P_{eff}\exp(\widetilde{L})-P_{eff}+1\right)}{P_{eff}-\exp(\widetilde{L})(P_{eff}-1)}$$

$$(16).$$

For transmission at a high data rate and a high SNR with $f'(0) = 1-2P_{eff} \approx 1$ as $P_{eff} << 1$, equation (14) may approximated as

$$L = f(\widetilde{L}) \approx \begin{cases} -\log\left(\frac{1-P_{eff}}{P_{eff}}\right) & \text{if } \widetilde{L} \leq -\log\left(\frac{1-P_{eff}}{P_{eff}}\right) \\ \widetilde{L} & \text{if } -\log\left(\frac{1-P_{eff}}{P_{eff}}\right) < \widetilde{L} < \log\left(\frac{1-P_{eff}}{P_{eff}}\right) \\ \log\left(\frac{1-P_{eff}}{P_{eff}}\right) & \text{if } \widetilde{L} \geq \log\left(\frac{1-P_{eff}}{P_{eff}}\right) \end{cases} \qquad (17).$$

Furthermore, if the first and second likelihood computation units 901, 902 are provided as a single element, e.g., a single processing unit, equation (17) may be expressed as

$$L \approx \begin{cases} -\log\left(\frac{1-P_{eff}}{P_{eff}}\right) & \text{if } \frac{2y}{\sigma_{h,i}^2} \leq -\log\left(\frac{1-P_{eff}}{P_{eff}}\right) \\ \frac{2y}{\sigma_{h,i}^2} & \text{if } -\log\left(\frac{1-P_{eff}}{P_{eff}}\right) < \frac{2y}{\sigma_{h,i}^2} < \log\left(\frac{1-P_{eff}}{P_{eff}}\right) \\ \log\left(\frac{1-P_{eff}}{P_{eff}}\right) & \text{if } \frac{2y}{\sigma_{h,i}^2} \geq \log\left(\frac{1-P_{eff}}{P_{eff}}\right) \end{cases} \qquad (18).$$

Equation (18) is equivalent to equation (17), however equation (18) omits the intermediate step of deriving the first likelihood value $\widetilde{L}$.

In other words, one may approximate equation (14) by a piecewise linear function to its distinct shape as equations (15) and (16). And for $f'(0) = 1-2P_{eff} \approx 1$ as usually in high-rate, high-SNR systems and $P_{eff} << 1$ one may thus approximate equation (14) as equation (17). This yields the system shown in Figs. 9 and 10, which places the saturation function behind the out-of-the-box LLR computation engine 902 with a saturation engine 901 implementing function $f(\widetilde{L})$ that yields the corrected LLRs for the LDPC decoder. One may also combine both computation engines 901, 902 into a single one, which computes equation (18).

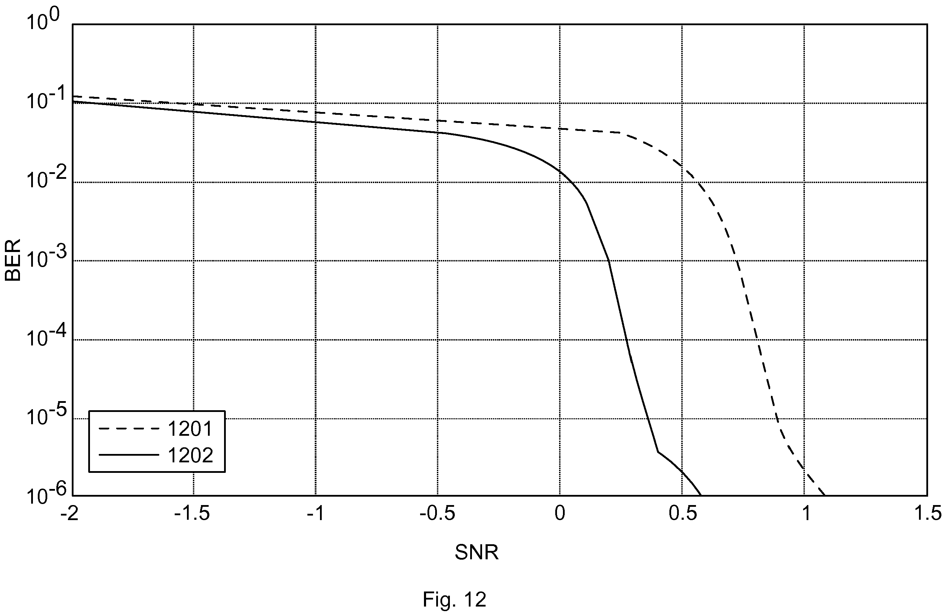

**Fig. 12** illustrates a relation between a Bit Error Rate (BER) of and a SNR for the receiver illustrated in Fig. 8 and for the example of an apparatus illustrated in Fig. 10.

In the example given in Fig. 12, there is assumed a transmission path with $H=5$ equidistantly spaced intermediate nodes similar to intermediate node 300 illustrated in Fig. 3. There is further assumed an LDPC rule with 25% overhead used for decoding the encoded data values of received signal $y$.

The abscissa of Fig. 12 represents the accumulated SNR of the noisy received signal $y$ input to receiver 800 and 1000 in units of dB. The ordinate represents the BER of the decoded data values output by receiver 800 and apparatus 1000. The BER is the rate of received bits of a data stream over a communication channel that have been altered due to noise, interference, distortion or bit synchronization errors. Line 1201 represents the BER for receiver 800 using equation (11), whereas line 1202 represents the BER for apparatus 1000 which may derive a second likelihood value $L$ based on the first likelihood value $\widetilde{L}$ for the encoded data value and the effective error probability $P_{eff}$ e.g., using equation (14).

As can be seen from Fig. 12, the required SNR for a same or very similar BER is for receiver 1000 approximately 0.6dB lower than for receiver 800 due to the usage of the second likelihood values, which may be derived in apparatus 1000. Accordingly, apparatus 1000 may be considered as less noise sensitive.

In other words, one may illustrate some advantages of the proposed concept by a small simulation example, where one assumes a channel with $H$=5 equidistantly spaced repeaters and an LDPC code with 25% overhead. From the simulation results shown in Fig. 12 (as a function of the total accumulated SNR) one can clearly see that the system that takes into account the modified LLR computation outperforms the system computing only conventional out-of-the-box LLRs according to equation (11) by 0.6dB.

To this point, the effective error probability $P_{eff}$ was considered as a given value. In conventional transmission networks, a higher network control knowing the exact signal path may configure an apparatus, which receives the signal, accordingly. However, for most transmission systems this is not the case, so that the effective error probability $P_{eff}$ needs to be determined or estimated. It is shown above that the distribution $p(y)$ does not depend on $P_{eff}$. Accordingly, $P_{eff}$ cannot be derived from signal $y$ input to the apparatus and distribution $p(y)$ alone.

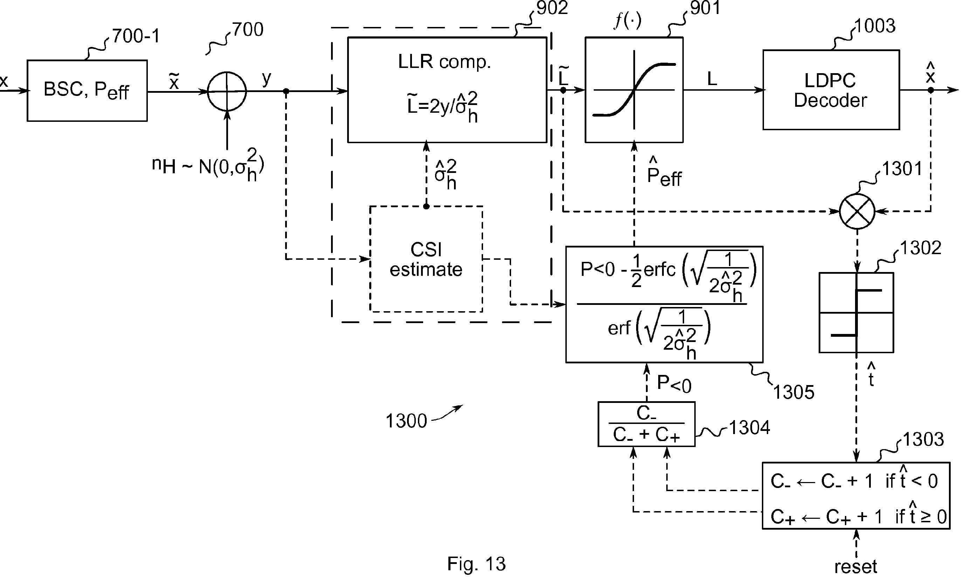

**Fig. 13** illustrates an example receiver apparatus 1300 which may estimate the BSC's effective error probability $P_{eff}$. The apparatus 1300 is to some extend similar to the apparatus 1000 illustrated in Fig. 10. The apparatus 1300 is configured to estimate the effective error probability $P_{eff}$ using the first likelihood value $\tilde{L}$, a hard decision of the decoded data value $\hat{x}$ and the noise power of the AWGN noise component $\hat{\sigma}_{h,i}^2$ of signal $y$. In some embodiments, the apparatus 1300 may estimate the effective error probability $P_{eff}$ by determining a relation of the noise power of the AWGN noise component $\hat{\sigma}_{h,i}^2$ and a combination of the first likelihood value $\tilde{L}$, the hard decision of the decoded data value $\hat{x}$ and the noise power of the AWGN noise component $\hat{\sigma}_{h,i}^2$.

Compared to apparatus 1000, the apparatus 1300 may additionally comprise a signal combiner 1301, an error hard decision unit 1302, a count unit 1303, a count ratio unit 1304 and effective error probability estimation unit 1305.

Signal combiner 1301 may combine the first likelihood value $\tilde{L}$ output by first likelihood computation unit 902 with a hard decision of the decoded data value $\hat{x}$. In one embodiment, a combined value $\tilde{L}$" may for example be determined as

$$\tilde{L}" = \hat{x}\tilde{L} \approx \log\left(\frac{p(y \mid \tilde{x} = +1)}{p(y \mid \tilde{x} = -1)}\right)_{X=+1} \qquad (19).$$

That is for example, the likelihood value given that X = +1 has been transmitted via the transmission path. Combined value $\tilde{L}$" may further be used to estimate the parameters of the employed Gaussian mixture model

$$p(y \mid x = +1) = \sum_{\tilde{x} \in \{\pm 1\}} p(y \mid \tilde{x}) P(\tilde{x} \mid x = +1) = (1 - P_{eff}) p(y \mid \tilde{x} = +1) + P_{eff} p(y \mid \tilde{x} = -1) \qquad (20),$$

which is determined by two Gaussian functions. For estimating these parameters, a simplified $K$-means like rule may be used.

Combined value $\tilde{L}$" may be input to error hard decision unit 1302 for determining a hard decision $\hat{t}$ of the combined value $\tilde{L}$". For example, error hard decision unit 1302 may be configured to determine the hard decision $\hat{t}$ of the combined value $\tilde{L}$" as

$$\hat{t} = \begin{cases} +1 & if \ \hat{x}\tilde{L} > 0 \\ -1 & otherwise \end{cases} \qquad (21).$$

Hard decision $\hat{t}$ of the combined value $\tilde{L}$" may be input to count unit 1303. Count unit 1303 may at least provide two counters for first and second count values C- and C+ which depend on the hard decision $\hat{t}$ of the combined value $\tilde{L}$". For example, count value C- may be increased if hard decision $\hat{t}$ = -1 and count value C+ may be increased if hard decision $\hat{t}$ = +1. Count unit 1303 may further comprise an input for a reset signal. The reset signal may be used to periodically set count values C- and C+ to zero in order to avoid counter overflow and to allow for new estimation in case the channel parameters of the transmission path vary.

The first and second count values C- and C+ may be input to count ratio unit 1304 which may, for example, determine a count ratio $P_{<0}$ of the first count value C- and a sum of the first and second count values C- and C+. The count ratio $P_{<0}$ may be interpreted as a probability based on a combination of the first likelihood value $\tilde{L}$ and the hard decision of the decoded data value $\hat{x}$. The count ratio $P_{<0}$ may for example be determined according to

$$P_{<0} = \frac{C_-}{C_- + C_+} \qquad (22).$$

The count ratio may be input to effective error probability estimation unit 1305 which may determine the effective error probability $P_{eff}$ based on the input count ratio $P_{<0}$ and the noise power $\hat{\sigma}_{h,i}^2$ of the signal $y$. Noise power $\hat{\sigma}_{h,i}^2$ may for example be determined by a CSI unit which may be part of first likelihood estimation unit 902 and may further be input to effective error probability estimation unit 1305. For example, the relation between the effective error probability $P_{eff}$, the count ratio $P_{<0}$ and the noise power $\hat{\sigma}_{h,i}^2$ may be determined as

$$P_{<0} = (1 - P_{eff}) \int_{-\infty}^{0} \frac{1}{\sqrt{2\pi}\sigma_{h,i}^2} \exp\left(-\frac{(t-1)^2}{2\sigma_{h,i}^2}\right) dt + P_{eff} \int_{-\infty}^{0} \frac{1}{\sqrt{2\pi}\sigma_{h,i}^2} \exp\left(-\frac{(t+1)^2}{2\sigma_{h,i}^2}\right) dt \qquad (23).$$

Solving equation (23) for $P_{eff}$ leads to

$$\hat{P}_{eff} = \frac{P_{<0} - \frac{1}{2}\mathrm{erfc}\left(\sqrt{\frac{1}{2\sigma_{h,i}^2}}\right)}{\mathrm{erf}\left(\sqrt{\frac{1}{2\sigma_{h,i}^2}}\right)} \qquad (24).$$

Therefore, the effective error probability estimation unit 1005 may for example determine the effective error probability $P_{eff}$ according to equation (24). The estimated effective error probability $P_{eff}$ may be input to second likelihood estimation unit 902. Accordingly, updated effective error probability $P_{eff}$ may be provided to the second likelihood estimation unit 902.

Equation (24) may further be approximated. Approximating the complementary error function as

$$\mathrm{erfc}\left(\sqrt{\frac{1}{2\sigma_{h,i}^2}}\right) \approx \frac{1}{6}\exp\left(\frac{-1}{2\sigma_{h,i}^2}\right) + \frac{1}{2}\exp\left(\frac{-2}{3\sigma_{h,i}^2}\right) \qquad (25)$$

leads to

$$P_{eff} \approx \frac{P_{<0} - \frac{1}{12}\exp\left(\frac{-1}{2\sigma_{h,i}^2}\right) - \frac{1}{4}\exp\left(\frac{-2}{3\sigma_{h,i}^2}\right)}{1 - \frac{1}{6}\exp\left(\frac{-1}{2\sigma_{h,i}^2}\right) - \frac{1}{2}\exp\left(\frac{-2}{3\sigma_{h,i}^2}\right)} \qquad (26).$$

A simplified expression may be obtained if the complementary error function is approximated as

$$\mathrm{erfc}\left(\sqrt{\frac{1}{2\sigma_{h,i}^2}}\right) \approx \alpha \exp\left(\frac{-\beta}{2\sigma_{h,i}^2}\right) \qquad (27),$$

with $\alpha$ and $\beta$ being constants chosen to minimize, e.g., the mean-squared error. For example, one may choose $\alpha$ = 0.8543 and $\beta$ = 1.9406.

In order to avoid computing an exponential function as in equation (27), one may instead use a polynomial approximation for the complementary error function, fitted for small values. For example, one may use

$$\mathrm{erfc}\left(\sqrt{\frac{1}{2\sigma_{h,i}^2}}\right) \approx \frac{\alpha}{2\sigma_{h,i}^2} + \beta\sqrt{\frac{1}{2\sigma_{h,i}^2}} + \gamma \qquad (28).$$

Accordingly, equation (24) may be approximated as

$$P_{eff} \approx \frac{P_{<0} - \frac{1}{2}\left(\frac{\alpha}{2\sigma_{h,i}^2} + \beta\sqrt{\frac{1}{2\sigma_{h,i}^2}} + \gamma\right)}{1 - \left(\frac{\alpha}{2\sigma_{h,i}^2} + \beta\sqrt{\frac{1}{2\sigma_{h,i}^2}} + \gamma\right)} \qquad (29).$$

As erfc(x) is a non-increasing convex function for x > 0, the first and second derivatives and basic calculus rules of the approximation give for the coefficients $\alpha$ and $\beta$ that $\alpha$ > 0 and $\beta$ < 0. In particular, the coefficients $\alpha$ and $\beta$ may be determined according to

$$\beta < -\alpha\sqrt{\frac{2}{\sigma_{h,i}^2}} \qquad (30).$$

For example, $\alpha$ = 0.4023, $\beta$ = -1.2593 and $\gamma$ = 1 may be chosen for equation (29).

The complementary error function may further be approximated as

$$\mathrm{erfc}\left(\sqrt{\frac{1}{2\sigma_{h,i}^2}}\right) \approx \alpha'\sigma_{h,i}^2 + \beta'\sigma_{h,i} + \gamma' \qquad (31).$$

Accordingly, equation (24) may be approximated as

$$P_{eff} \approx \frac{P_{<0} - \frac{1}{2}\left(\alpha'\sigma_{h,i}^2 + \beta\sigma_{h,i} + \gamma'\right)}{1 - \left(\alpha'\sigma_{h,i}^2 + \beta\sigma_{h,i} + \gamma'\right)} \qquad (32).$$

For example, $\alpha'$ = 0.4781, $\beta'$ = -0.138 and $\gamma'$ = 0.0036 may be chosen for equation (32).

For transmission paths in which the expected value of $\hat{\sigma}_{h,i}^2$ is known, a Taylor series expansion around $\sigma_{h,i}$ may be used. For example, if $\sigma_{h,i}$ = 1/2 is expected, the effective error probability may be approximated using a Taylor series expansion as

$$P_{eff} \approx$$

$$1.0476692P_{<0} - 0.023834613 + (0.47408855P_{<0} - 0.23704427)\left(\sigma_{h,i} - \frac{1}{2}\right) (33).$$

Alternatively, Taylor series expansions around other points may be made. Also, a limitation of the admissible range may be applied.

For determining the effective error probability $P_{eff}$, the effective error probability estimation unit 1305 may comprise a lookup table which holds an effective error probability value $P_{eff}$ corresponding to a count ratio $P_{<0}$ input to the effective error probability estimation unit 1305. The corresponding values may for example be determined beforehand using equations (24), (26), (29), (32) or (33).

In other words, one may use the estimates of the channel decoder output $\hat{x}$ (which is also bipolar and not binary) to compute intermediate values $\tilde{L}''$, i.e., the LLR values given that X = +1 has been transmitted. These may then be used in a simplified $K$-means like algorithm to estimate the parameters of the Gaussian mixture model that is used. The used Gaussian mixture model is computed of two Gaussians. First, one may make a hard decision on the values $\tilde{L}''$ and get a hard decision $\hat{t}$ according to equation (21). And then one may use this value to increase counter values C- and C+, depending on $\hat{t}$. The reset entry at the counter increment block may periodically set C- and C+ to zero to avoid counter overflow and to enable new estimation in case of varying channel parameters. We may use C- and C+ to compute count ratio $P_{<0}$ according to equation (22). One knows that count ratio $P_{<0}$ and effective error probability $P_{eff}$ are related according to equation (23), so that solving this equation for $P_{eff}$ yields to equation (24). Equation (24) can be implemented, e.g., using a lookup-table.

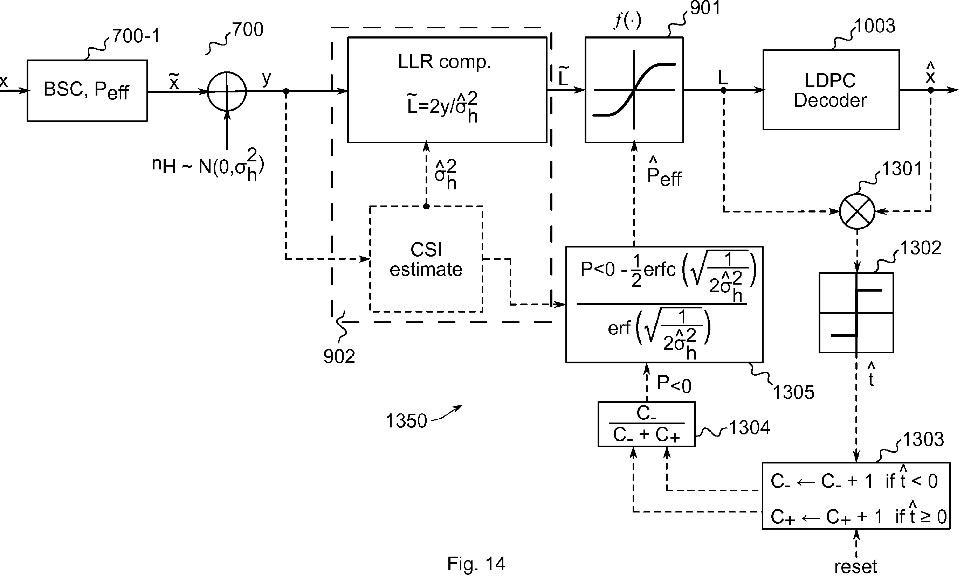

**Fig. 14** illustrates a variation of the example of an apparatus 1300 illustrated in Fig. 13. The apparatus 1350 illustrated in Fig. 14 is similar to apparatus 1300 illustrated in Fig. 13 except that the second likelihood value L is input to signal combiner 1301 instead of the first likelihood value $\tilde{L}$.

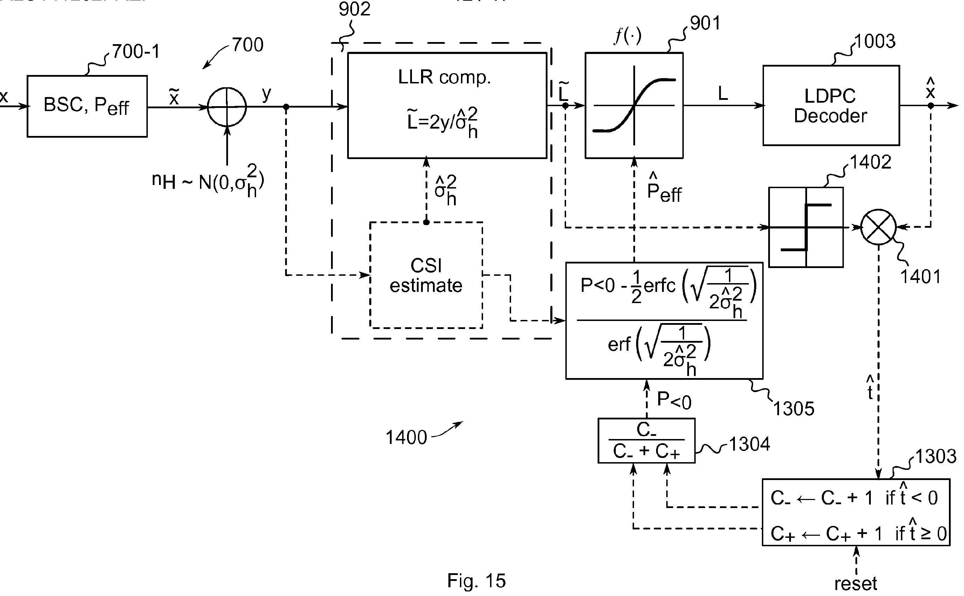

**Fig. 15** illustrates an alternative example of an apparatus 1400 which is similar to apparatus 1300 illustrated in Fig. 13 except that the signal combiner 1301 and the error hard decision unit 1302 are removed and a signal combiner 1401 and a likelihood hard decision unit 1402 are provided

Likelihood hard decision unit 1402 may take the first likelihood value $\tilde{L}$ and determine a hard decision of the first likelihood value $\tilde{L}$. The hard decision of the first likelihood value $\tilde{L}$ and the hard decision of the decoded data value $\hat{x}$ may be input to signal combiner 1401 to combine these values and determine a hard decision which is equal to the hard decision $\hat{t}$ of the combined value $\tilde{L}''$ of receiver 1300 illustrated in Fig. 13. The further processing of the hard decision is equal to the processing described in connection with receiver 1300 illustrated in Fig. 13. A detailed description thereof will thus be omitted.

In other words, as the post-processing in the receiver requires knowledge of the probability of making an error in the accumulated regenerator chain, a code-aided estimator of this probability is used, that allows the configuration of the post-processing function.

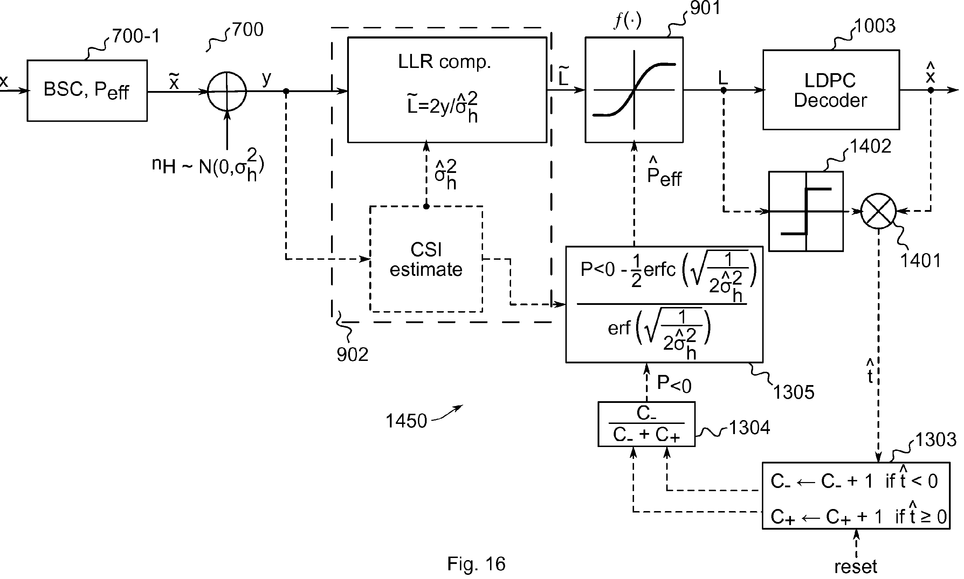

**Fig. 16** illustrates a variation of the example of an apparatus 1400 illustrated in Fig. 15. The apparatus 1450 illustrated in Fig. 16 is similar to apparatus 1400 illustrated in Fig. 15 except that the likelihood hard decision unit 1402 takes the second likelihood value $L$ instead of the first likelihood value $\tilde{L}$ and determines a hard decision of the second likelihood value $L$.

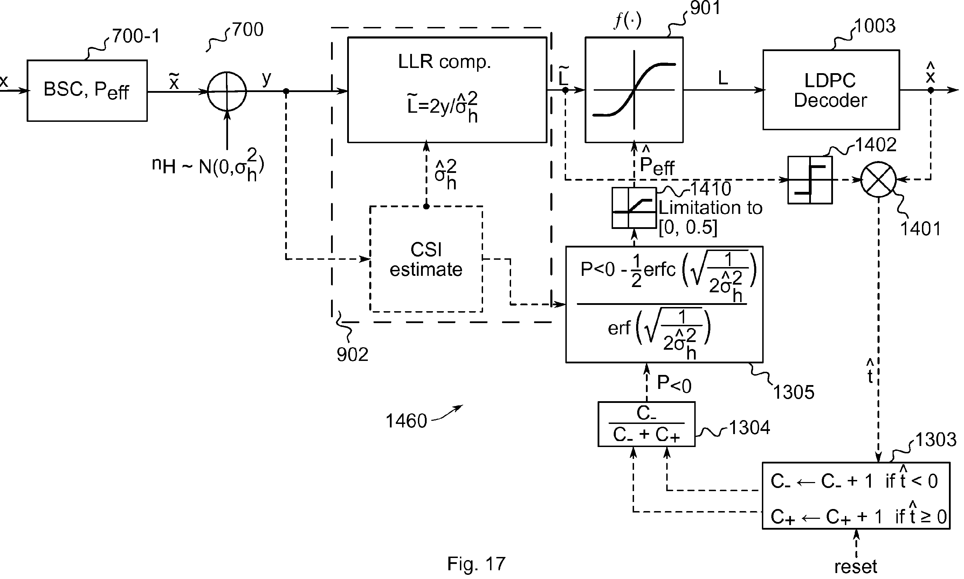

**Fig. 17** illustrates another alternative further example of an apparatus 1460 which is similar to apparatus 1450 illustrated in Fig. 16 except that the apparatus 1460 further comprises a limitation unit 1410 which may limit the effective error probability determined in the effective error probability estimation unit 1305 to a certain range of possible values. For example, the effective error probability $P_{eff}$ may be limited to values comprised in [0, 0.5]. The value range [0, 0.5] may be sufficient to describe the effective error probability $P_{eff}$. In particular, for $P_{eff}$ = 1 every bit may be deterministically flipped so that no random errors may be described. For $P_{eff}$ = 0.5 a completely random sequence may be generated causing a flat distribution of the second likelihood value $L$ having the value zero. Accordingly, no information on the received bit may be gathered from the second likelihood value $L$. Moreover, $P_{eff}$ may also be limited to value ranges included in [0, 0.5], e.g., [0, 0.2], depending on a method used for determining $P_{eff}$. In General, $P_{eff}$ may be limited to a value included in a value range which is comprised in [0, 1] and narrower than [0, 1].

Using general equation (24), limitation unit 1410 may for example determine the effective error probability $P_{eff}$ according to

$$P_{eff} = \max\left(\min\left(\frac{P_{<0} - \frac{1}{2}\,\mathrm{erfc}\left(\sqrt{\frac{1}{2\sigma_{h,i}^2}}\right)}{\mathrm{erf}\left(\sqrt{\frac{1}{2\sigma_{h,i}^2}}\right)}, \frac{1}{2}\right), 0\right) \qquad (34),$$

with $min(x,y)$ being a function that provides the smaller one of the values $x, y$ and $max(x, y)$ being a function that provides the larger one of the values $x, y$.

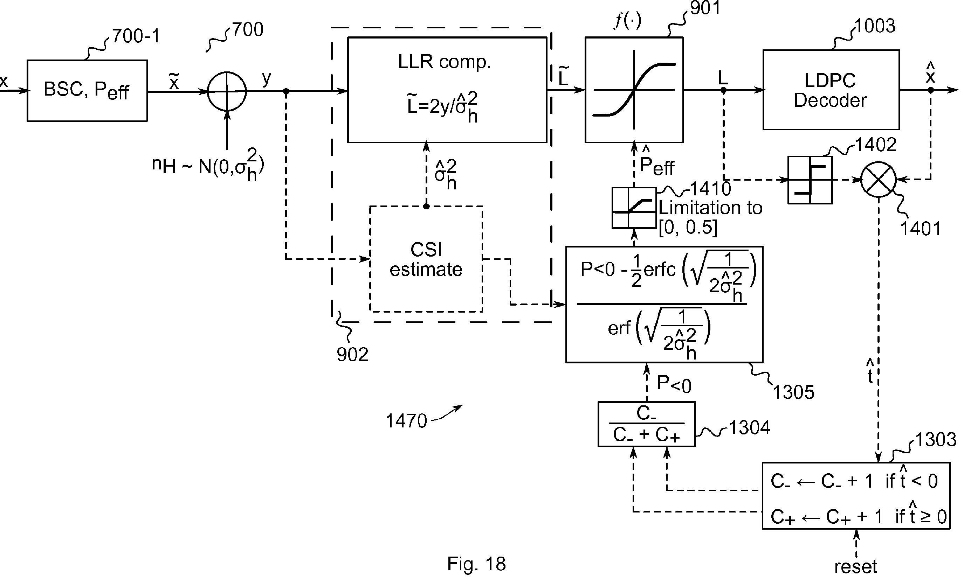

**Fig. 18** illustrates a variation of the example of an apparatus 1460 illustrated in Fig. 17. The apparatus 1470 illustrated in Fig. 18 is similar to apparatus 1460 illustrated in Fig. 17 except that the likelihood hard decision unit 1402 takes the second likelihood value L instead of the first likelihood value $\tilde{L}$ and determines a hard decision of the second likelihood value $L$.

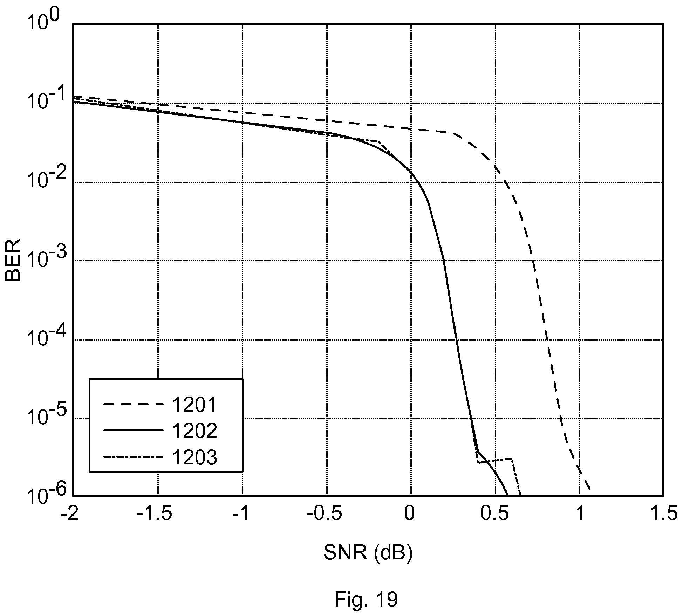

**Fig. 19** illustrates the same situation as Fig. 12. Additionally, line 1203 represents the BER for apparatuses 1300, 1350, 1400, 1450 and 1460 which may estimate the effective error probability $P_{eff}$. As can be seen from Fig. 19, apparatuses 1300, 1350, 1400, 1450 and 1460 may achieve almost the same performance as apparatus 1000 knowing the exact effective error probability $P_{eff}$ from a higher network plane.

In other words, the receivers of Figs. 13 to 18 are compared with a receiver that perfectly knows $P_{eff}$, as in Fig. 10. One can see, that almost exactly the same performance as the receiver which exactly knows $P_{eff}$ is achieved, showing the extraordinary performance of the proposed method.

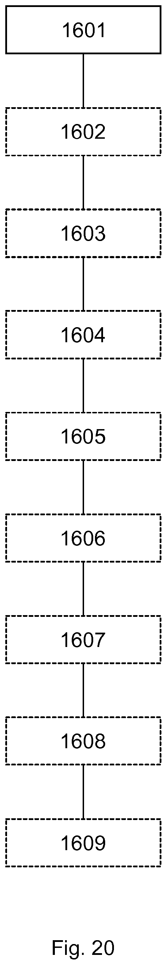

To summarize, **Fig. 20** illustrates a flowchart of an example of a method for decoding a receive signal carrying at least one encoded data value, the receive signal having a non-AWGN and an AWGN noise component. The method may comprise deriving 1601 a second likelihood value based on a first likelihood value for the encoded data value and an effective error probability of a transmission path of the receive signal. The first likelihood value is based on the AWGN noise component and the effective error probability is based on the non-AWGN noise component.

The method may optionally comprise deriving 1602 a decoded data value based on the second likelihood value.

Further, the method may optionally comprise estimating 1603 the effective error probability using the first or second likelihood value, a hard decision of the decoded data value and a noise power of the AWGN noise component.

Estimating the effective error probability may optionally comprise determining 1604 a relation of the noise power of the AWGN noise component and a combination of the first or second likelihood value, the hard decision of the decoded data value and the noise power of the AWGN noise component.

Estimating the effective error probability may optionally comprise combining 1605 the first or second likelihood value and the hard decision of the decoded data value to a combined value; determining a hard decision of the combined value; increasing a first count value or a second count value based on the hard decision of the combined value; determining a count ratio of the first count value and a sum of the first and second count values; and determining a relation of the noise power of the AWGN noise component and a combination of the count ratio and the noise power of the AWGN noise component.

Estimating the effective error probability may optionally comprise determining 1606 a hard decision of the first or second likelihood value; combining the hard decision of the first or second likelihood value and the hard decision of the decoded data value to a combined value; increasing a first count value or a second count value based on the combined value; determining a count ratio of the first count value and a sum of the first and second count values; and determining a relation of the noise power of the AWGN noise component and a combination of the count ratio and the noise power of the AWGN noise component.

Deriving the second likelihood value may optionally comprise combining 1607 the effective error probability and the first likelihood value.

Deriving the second likelihood value may optionally comprise determining 1608 a relation of a first combination of the effective error probability and the first likelihood value and a second combination of the effective error probability and the first likelihood value.

The method may optionally comprise limiting 1609 the effective error probability to a value included in a value range which is narrower than [0, 1]. In particular, the method may optionally comprise limiting 1609 the effective error probability to a value included in [0, 0.5].

Although the above description focused on a binary-input AWGN channel, i.e., BPSK transmission with a single polarization, the above apparatuses and methods may further be applied to QPSK and dual-polarization transmission. QPSK transmission with AWGN and Gray bit mapping may be decomposed into two real-valued binary inputs in AWGN channels, i.e., BPSK transmission. The above described apparatuses and methods may also be used with higher order modulation formats, e.g., 16QAM.

In the foregoing, exemplary mathematical equations have been presented for deriving first and second likelihood values, the effective error probability, the count ratio etc. It will be readily understood by a person skilled in the art that different mathematical expressions may be used for achieving the same results as those presented within this disclosure. Accordingly, the apparatuses and methods described herein shall not be limited to the exact equations described herein but shall comprise any mathematical expressions achieving the same results.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "units" (performing a certain function) shall be understood as functional blocks comprising analog and/or digital electrical circuitry that is adapted or configured for performing a certain function, respectively. A unit being adapted for performing a certain function does, hence, not imply that such unit necessarily is performing said function (at a given time instant).

Functions of various elements shown in the figures, including any functional blocks labeled as "unit", "means", "means for ....", "....", etc., may be provided through the use of dedicated hardware, such as "a processor", "a controller", etc. as well as hardware capable of executing software in association with appropriate software. Moreover, any entity described herein as "unit", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method for decoding a receive signal carrying at least one encoded data value, the receive signal having a non-AWGN and an AWGN noise component, the method comprising:

   deriving a second likelihood value based on a first likelihood value for the encoded data value and an effective error probability of a transmission path of the receive signal, the transmission path being assumed to comprise H sub-paths with H being an integer, wherein the first likelihood value is based on the AWGN noise component which is related to the first H-1 sub-paths being modelled as BSC channels, the effective error probability representing the accumulated error probabilities of the first H-1 sub-paths;
   the method **characterized by**:

   deriving a decoded data value based on the second likelihood value; and
   estimating the effective error probability using the first likelihood value, a hard decision of the decoded data value and a noise power of the AWGN noise component by:

combining the first likelihood value and the hard decision of a decoded data value to obtain a combined value;
providing a hard decision based on the combined value;
keeping first and second count values which are respectively increased according to the positive and negative hard decision values on successive combined values;
computing a count ratio on the first count value and a sum of the first and second count values; and determining an approximation of the effective error probability based on the count ratio and the noise power of the AWGN noise component in the received signal.

2. The method of claim 1, wherein the combination of the count ratio and the noise power of the AWGN noise component

$$P_{<0} - \frac{1}{2} erfc\left(\sqrt{\frac{1}{2\sigma_{h,i}^2}}\right),$$

corresponds to $\qquad$ with $\sigma_{h,i}^2$ denoting the noise power of the AWGN noise component, $P_{<0}$ denoting the count ratio.

3. The method of claim 1, wherein estimating the effective error probability is based on an expression which is mathematically correspondent to

$$P_{eff} = \frac{P_{<0} - \frac{1}{2} erfc\left(\sqrt{\frac{1}{2\sigma_{h,i}^2}}\right)}{erf\left(\sqrt{\frac{1}{2\sigma_{h,i}^2}}\right)},$$

ematically correspondent to $\qquad$ with $P_{eff}$ denoting the effective error probability, $\sigma_{h,i}^2$ denoting the noise power of the AWGN noise component, $P_{<0}$ denoting the count ratio.

4. The method of claim 1, further comprising:
limiting the effective error probability to a value included in a value range which is narrower than [0, 1].

5. The method of claim 1, further comprising:
limiting the effective error probability to a value included in [0, 0.5].

6. The method of claim 1, wherein deriving the second likelihood value comprises combining the effective error probability and the first likelihood value.

7. The method of claim 1, wherein deriving the second likelihood value comprises determining a relation of a first combination of the effective error probability and the first likelihood value and a second combination of the effective error probability and the first likelihood value.

8. The method of claim 1, wherein the receive signal is an optical signal.

9. A computer program having a program code for performing the method of any of claims 1 to 8, when the computer program is executed on a computer or processor.

10. An apparatus for decoding a receive signal carrying at least one encoded data value, the receive signal having a non-AWGN and an AWGN noise component, the apparatus comprising:
a processor unit configured to derive a second likelihood value based on a first likelihood value for the encoded data value and an effective error probability of a transmission path of the receive signal, the transmission path being assumed to comprise H sub-paths with H being an integer, wherein the first likelihood value is based on the AWGN noise component and wherein the effective error probability is based on the non-AGWN noise component which is related to the first H-1 sub-paths being modelled as BSC channels, the effective error probability representing the accumulated error probabilities of the first H-1 sub-paths; and **characterized by**:

a decoder configured to derive a decoded data value based on the second likelihood value; and
wherein the processor is further configured to estimate the effective error probability using the first likelihood value, a hard decision of the decoded data value and a noise power of the AWGN noise component by:

combining the first likelihood value and the hard decision of a decoded data value to obtain a combined value;
providing a hard decision based on the combined value;
keeping first and second count values which are respectively increased according to the positive and negative hard decision values on successive combined values;
computing a count ratio on the first count value and a sum of the first and second count values; and determining an approximation of the effective error probability based on the count ratio and the noise power of the AWGN noise component in the received signal.

**Patentansprüche**

1. Verfahren zum Dekodieren eines Empfangssignals, das mindestens einen kodierten Datenwert überträgt, wobei das Empfangssignal eine Nicht-AWGN-Rauschkomponente und eine AWGN-Rauschkomponente aufweist, wobei das Verfahren folgende Schritte umfasst:

- Herleiten eines zweiten Wahrscheinlichkeitswerts, basierend auf einem ersten Wahrscheinlichkeitswert für den kodierten Datenwert und einer effektiven Fehlerwahrscheinlichkeit eines Übertragungspfades des Empfangssignals,
wobei angenommen wird, dass der Übertragungspfad H Unterpfade aufweist, wobei H eine ganze Zahl ist, wobei der erste Wahrscheinlichkeitswert auf der AWGN-Rauschkomponente basiert, die mit den ersten H-1-Unterpfaden, die als BSC-Kanäle modelliert werden, in Beziehung steht,
wobei die effektive Fehlerwahrscheinlichkeit die kumulierten Fehlerwahrscheinlichkeiten der ersten H-1-Unterpfade darstellt;

wobei das Verfahren durch folgende Schritte gekennzeichnet ist:

- Herleiten eines dekodierten Datenwerts, basierend auf dem zweiten Wahrscheinlichkeitswert; und
- Schätzen der effektiven Fehlerwahrscheinlichkeit unter Verwendung des ersten Wahrscheinlichkeitswerts, einer harten Entscheidung über den dekodierten Datenwert und einer Rauschleistung der AWGN-Rauschkomponente durch folgende Schritte:

◦ Kombinieren des ersten Wahrscheinlichkeitswerts und der harten Entscheidung eines dekodierten Datenwerts, um einen kombinierten Wert zu erhalten;
◦ Liefern einer harten Entscheidung auf der Grundlage des kombinierten Werts;
◦ Beibehalten der ersten und zweiten Zählwerte, die jeweils in Abhängigkeit von den positiven und negativen Werten der harten Entscheidung für aufeinanderfolgende kombinierte Werte erhöht werden;
◦ Berechnen eines Zählverhältnisses für den ersten Zählwert und eine Summe der ersten und zweiten Zählwerte; und
◦ Bestimmen einer Näherung der effektiven Fehlerwahrscheinlichkeit auf der Grundlage des Zählverhältnisses und der Rauschleistung der AWGN-Rauschkomponente im empfangenen Signal.

2. Verfahren nach Anspruch 1,
wobei die Kombination des Zählverhältnisses und der Rauschleistung der AWGN-Rauschkomponente

$$P_{<0} - \frac{1}{2} erfc\left(\sqrt{\frac{1}{2\sigma_{h,i}^2}}\right)$$

entspricht, wobei $\sigma_{h,i}^2$ die Rauschleistung der AWGN-Rauschkomponente und $P_{<0}$ das Zählverhältnis bezeichnet.

3. Verfahren nach Anspruch 1,
wobei das Schätzen der effektiven Fehlerwahrscheinlichkeit auf einem Ausdruck basiert, der mathematisch dem Ausdruck

$$P_{eff} = \frac{P_{<0} - \frac{1}{2} erfc\left(\sqrt{\frac{1}{2\sigma_{h,i}^2}}\right)}{erfc\left(\sqrt{\frac{1}{2\sigma_{h,i}^2}}\right)}$$

entspricht, wobei $P_{eff}$ die effektive Fehlerwahrscheinlichkeit,

$\sigma_{h,i}^2$ die Rauschleistung der AWGN-Rauschkomponente, und

$P_{<0}$ das Zählverhältnis bezeichnen.

**4.** Verfahren nach Anspruch 1,
das ferner Folgendes umfasst:

- Beschränken der effektiven Fehlerwahrscheinlichkeit auf einen Wert, der in einem Wertebereich liegt, der enger als [0, 1] ist.

**5.** Verfahren nach Anspruch 1,
das ferner Folgendes umfasst:

- Beschränken der effektiven Fehlerwahrscheinlichkeit auf einen in dem Bereich von [0, 0,5] liegenden Wert.

**6.** Verfahren nach Anspruch 1,
wobei das Herleiten des zweiten Wahrscheinlichkeitswerts das Kombinieren der effektiven Fehlerwahrscheinlichkeit und des ersten Wahrscheinlichkeitswerts umfasst.

**7.** Verfahren nach Anspruch 1,
wobei das Herleiten des zweiten Wahrscheinlichkeitswerts das Bestimmen einer Relation von einer ersten Kombination der effektiven Fehlerwahrscheinlichkeit und des ersten Wahrscheinlichkeitswerts und von einer zweiten Kombination der effektiven Fehlerwahrscheinlichkeit und des ersten Wahrscheinlichkeitswerts umfasst.

**8.** Verfahren nach Anspruch 1,
wobei das Empfangssignal ein optisches Signal ist.

**9.** Computerprogramm mit einem Programmcode zum Durchführen des Verfahrens nach einem der Ansprüche 1 bis 8, wenn das Computerprogramm auf einem Computer oder Prozessor ausgeführt wird.

**10.** Vorrichtung zum Dekodieren eines Empfangssignals, das mindestens einen kodierte Datenwert umfasst, wobei das Empfangssignal eine Nicht-AWGN-Rauschkomponente und eine AWGN-Rauschkomponente aufweist, wobei die Vorrichtung Folgendes aufweist:

- eine Prozessoreinheit, die dazu konfiguriert ist, einen zweiten Wahrscheinlichkeitswert, basierend auf einem ersten Wahrscheinlichkeitswert für den kodierten Datenwert und einer effektiven Fehlerwahrscheinlichkeit eines Übertragungspfades des Empfangssignals abzuleiten,
wobei angenommen wird, dass der Übertragungspfad H Unterpfade umfasst, wobei H eine ganze Zahl ist, wobei der erste Wahrscheinlichkeitswert auf der AWGN-Rauschkomponente basiert und wobei die effektive Fehlerwahrscheinlichkeit auf der Nicht-AGWN-Rauschkomponente basiert, die sich auf die ersten H-1-Unterpfade bezieht, die als BSC-Kanäle modelliert werden,
wobei die effektive Fehlerwahrscheinlichkeit die akkumulierten Fehlerwahrscheinlichkeiten der ersten H-1-Unterpfade darstellt; und

wobei die Vorrichtung durch Folgendes gekennzeichnet ist:

- einen Dekodierer, der dazu konfiguriert ist, einen dekodierten Datenwert auf der Grundlage des zweiten Wahrscheinlichkeitswerts abzuleiten; und

wobei der Prozessor ferner dazu konfiguriert ist, die effektive Fehlerwahrscheinlichkeit unter Verwendung des ersten Wahrscheinlichkeitswerts, einer harten Entscheidung des dekodierten Datenwerts und einer Rauschleistung der AWGN-Rauschkomponente zu schätzen,

und zwar durch folgende Schritte:

◦ Kombinieren des ersten Wahrscheinlichkeitswerts und der harten Entscheidung eines dekodierten Datenwerts, um einen kombinierten Wert zu erhalten;
◦ Liefern einer harten Entscheidung auf der Grundlage des kombinierten Werts;
◦ Beibehalten der ersten und zweiten Zählwerte, die jeweils in Abhängigkeit von den positiven und negativen Werten der harten Entscheidung auf aufeinanderfolgende kombinierte Werte erhöht werden;
◦ Berechnen eines Zählverhältnisses für den ersten Zählwert und eine Summe der ersten und zweiten Zählwerte; und
◦ Bestimmen einer Näherung der effektiven Fehlerwahrscheinlichkeit auf der Grundlage des Zählverhältnisses und der Rauschleistung der AWGN-Rauschkomponente im empfangenen Signal.

## Revendications

1. Procédé de décodage d'un signal de réception portant au moins une valeur de données codée, le signal de réception présentant un composant de bruit non-BABG et un composant de bruit BABG, le procédé comprenant :

la dérivation d'une valeur de deuxième éventualité sur la base d'une valeur de première éventualité pour la valeur de données codée et d'une probabilité d'erreur effective d'un chemin de transmission du signal de réception, le chemin de transmission étant présumé comprendre des sous-chemins H où H est un entier, selon lequel la première valeur d'éventualité se base sur le composant de bruit BABG qui est lié aux premiers sous-chemins H-1 modélisés sous forme de canaux CBS, la probabilité d'erreur effective représentant les probabilités d'erreur accumulées des premiers sous-chemins H-I ;
le procédé étant **caractérisé par** :

la dérivation d'une valeur de données décodée sur la base de la deuxième valeur d'éventualité ; et
l'estimation de la probabilité d'erreur effective par le biais de la première valeur d'éventualité, d'une décision matérielle de la valeur de données décodée et d'une puissance de bruit du composant de bruit BABG en :

la combinaison de la première valeur d'éventualité et la décision matérielle d'une valeur décodée afin d'obtenir une valeur combinée ;
la fourniture d'une décision matérielle sur la base de la valeur combinée ;
la rétention de première et deuxième valeurs de comptage que l'on augmente respectivement selon les valeurs de décision matérielle positive et négative relatives à des valeurs combinées successives ;
le calcul d'un rapport de comptage de la première valeur de comptage et d'une somme des première et deuxième valeurs de comptage ; et
le calcul d'une approximation de la probabilité d'erreur effective sur la base du rapport de comptage et de la puissance de bruit du composant de bruit BABG du signal de réception.

2. Procédé selon la revendication 1, selon lequel la combinaison du rapport de comptage et de la puissance de bruit du composant de bruit BABG correspond à $P_{<0} - \frac{1}{2}\,\mathrm{erfc}\left(\sqrt{\dfrac{1}{2\sigma_{h,i}^2}}\right),$ où $\sigma^2_{h,i}$ signifie la puissance de bruit du composant de bruit BABG, $P_{<0}$ signifiant le rapport de comptage.

3. Procédé selon la revendication 1, selon lequel l'estimation de la probabilité d'erreur effective se base sur une

$$P_{eff} = \frac{P_{<0} - \frac{1}{2}\text{erfc}\left(\sqrt{\frac{1}{2\sigma_{h,i}^2}}\right)}{\text{erf}\left(\sqrt{\frac{1}{2\sigma_{h,i}^2}}\right)},$$

expression qui correspond mathématiquement à $\sqrt{\frac{1}{2\sigma_{h,i}^2}}$ où $P_{eff}$ signifie la probabilité d'erreur effective, $\sigma_{h,i}^2$ signifiant la puissance de bruit du composant de bruit BABG, $P_{<0}$ signifiant le rapport de comptage.

4. Procédé selon la revendication 1 comprenant en outre la limitation de la probabilité d'erreur effective à une valeur incluse dans une plage de valeurs qui est plus étroite que [0, 1].

5. Procédé selon la revendication 1 comprenant en outre la limitation de la probabilité d'erreur effective à une valeur incluse dans [0, 0.5].

6. Procédé selon la revendication 1, selon lequel la dérivation de la deuxième valeur d'éventualité comprend la combinaison de la probabilité d'erreur effective et la première valeur d'éventualité.

7. Procédé selon la revendication 1, selon lequel la dérivation de la deuxième valeur d'éventualité comprend le calcul d'une relation d'une première combinaison de la probabilité d'erreur effective et de la première valeur d'éventualité et d'une deuxième combinaison de la probabilité d'erreur effective et la première valeur d'éventualité.

8. Procédé selon la revendication 1, selon lequel le signal de réception est un signal optique.

9. Programme informatique présentant un code de programmation pour la mise en œuvre du procédé selon l'une quelconque des revendications 1 à 8, lorsque le programme informatique est exécuté sur un ordinateur ou par un processeur.

10. Équipement de décodage d'un signal de réception portant au moins une valeur de données codée, le signal de réception présentant un composant de bruit non-BABG et un composant de bruit BABG, l'équipement comprenant :

une unité de processeur configurée pour dériver une valeur de deuxième éventualité sur la base d'une valeur de première éventualité pour la valeur de données codée et d'une probabilité d'erreur effective d'un chemin de transmission du signal de réception, le chemin de transmission étant présumé comprendre des sous-chemins H où H est un entier, selon lequel la première valeur d'éventualité se base sur le composant de bruit BABG et selon lequel la probabilité d'erreur effective se base sur le composant de bruit non-BABG qui est lié aux premiers sous-chemins H-1 modélisés sous forme de canaux CBS, la probabilité d'erreur effective représentant les probabilités d'erreur accumulées des premiers sous-chemins H-1 ; et
**caractérisé par** :

un décodeur configuré pour dériver une valeur de données décodée sur la base de la deuxième valeur d'éventualité ; et
selon lequel le processeur est en outre configuré pour estimer la probabilité d'erreur effective par le biais de la première valeur d'éventualité, d'une décision matérielle de la valeur de données décodée et d'une puissance de bruit du composant de bruit BABG en :

combinant la première valeur d'éventualité et la décision matérielle d'une valeur décodée afin d'obtenir une valeur combinée ;
la fourniture d'une décision matérielle sur la base de la valeur combinée ;
la rétention de première et deuxième valeurs de comptage que l'on augmente respectivement selon les valeurs de décision matérielle positive et négative relatives à des valeurs combinées successives ;
le calcul d'un rapport de comptage de la première valeur de comptage et d'une somme des première et deuxième valeurs de comptage ; et
le calcul d'une approximation de la probabilité d'erreur effective sur la base du rapport de comptage et de la puissance de bruit du composant de bruit BABG du signal de réception.

ALU141202PAEP

x=empty container

Fig. 1

EP 3 086 496 B1

ALU141202PAEP

Fig. 2

EP 3 086 496 B1

ALU141202PAEP

Fig. 3

Fig. 4

Fig. 5

Fig. 6

Fig. 7

Fig. 8

Fig. 9

Fig. 10

EP 3 086 496 B1

Fig. 11

Fig. 12

Fig. 13

Fig. 14

Fig. 15

Fig. 16

Fig. 17

Fig. 18

EP 3 086 496 B1

Fig. 19

Fig. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TINGTING MIAO.** *BER Modified Decode- and-Forward Protocol for OFDM-Based Linear Multihop Networks, China Communications, China Institute of Communications,* 01 November 2014, vol. 11 (11), 34-43